# EUROPÄISCHE PATENTSCHRIFT

(11) **EP 3 470 259 B1**
(45) Veröffentlichungstag und Bekanntmachung des Hinweises auf die Patenterteilung: **27.07.2022**
(21) Anmeldenummer: 18194459.6
(22) Anmeldetag: 14.09.2018
(51) Int. Cl.: B60L 58/18, B60L 58/21, H02J 7/00

(54) **ENERGIESPEICHERSYSTEM MIT MEHREREN PARALLEL VERSCHALTETEN ENERGIESPEICHERN UND VERFAHREN ZUM BETRIEB EINES ENERGIESPEICHERSYSTEMS**
ENERGY STORAGE SYSTEM WITH A PLURALITY OF PARALLEL CONNECTED ENERGY STORAGE DEVICES AND METHOD FOR OPERATING AN ENERGY STORAGE SYSTEM
SYSTÈME D'ACCUMULATEURS D'ÉNERGIE DOTÉ D'UNE PLURALITÉ D'ACCUMULATEURS D'ÉNERGIE COUPLÉS EN PARALLÈLE ET PROCÉDÉ DE FONCTIONNEMENT D'UN SYSTÈME D'ACCUMULATEURS D'ÉNERGIE

(30) Priorität: 12.10.2017 DE 102017123730
(43) Veröffentlichungstag der Anmeldung: 17.04.2019
(73) Patentinhaber: MAN Truck & Bus SE, 80995 München (DE)
(72) Erfinder: Weber, Benjamin, 80796 München (DE); Kratzer, Sebastian, 85757 Karlsfeld (DE)
(74) Vertreter: v. Bezold & Partner Patentanwälte - PartG mbB

(56) Entgegenhaltungen:
- WO-A1-2016/062284
- DE-A1-102010 035 073
- DE-A1-102014 216 876
- DE-T5-112014 007 057
- US-A1- 2013 106 357
- US-A1- 2016 197 497

## Beschreibung

Die Erfindung betrifft ein Energiespeichersystem mit mehreren parallel verschalteten Energiespeichern und ein Verfahren zum Betrieb eines solchen Energiespeichersystems. Das Energiespeichersystem kann ein Traktionsenergiespeichersystem, insbesondere für ein Fahrzeug, beispielsweise für ein Nutzfahrzeug, sein. Insbesondere wird eine Technik zum veränderlichen Verschalten, beispielsweise zum Zuschalten, von Energiespeichern in einem Energiespeichersystems während des Entladens beschrieben.

Für die Bereitstellung großer Energien im Bereich Nutzfahrzeuge oder stationären Energiespeichern ist der Einsatz von parallel geschalteten Speichersystemen nötig.

Elektrische Energiespeicher, insbesondere Traktionsbatterien bzw. Hochvoltbatterien von Mildhybrid-, Hybrid- oder Elektrofahrzeugen, unterliegen diversen Alterungseffekten und sollten im Hinblick auf die Alterungseffekte auf eine geplante Lebensdauer, vorzugsweise der geplanten Produktlebensdauer des Kraftfahrzeugs, ausgelegt sein. Durch eine sehr hohe Betriebszeit der Batterien kommt es auch bei geringen Strömen zu hoher zyklischer Alterung.

Dokument US 2016/197497 A1 beschreibt ein Energiespeichersystem mit mehreren Sekundärbatteriesätzen, die jeweils mehrere Sekundärbatterien aufweisen. Beim Umschalten von dem mit den Eingangs-/Ausgangsanschlüssen des Systems verbundenen Sekundärbatteriesatz auf einen ersten Sekundärbatteriesatz, bei dem die Spannung höher als bei einem zweiten Sekundärbatteriesatz ist, wird der Ladevorgang des zweiten Sekundärbatteriesatzes beendet und der Stromfluss des ersten Sekundärbatteriesatzes beim Entladevorgang begrenzt.

Dokument DE 10 2010 035073 A1 beschreibt ein Energie-Management-System, welches mit mindestens einer Batterie und mindestens einem Energieverbraucher elektrisch verbindbar ist, wobei die Batterie aus mehreren Speicherzellen besteht. Der Energieverbraucher wird im Wesentlichen durch das Energie-Management-System mit Verbrauchsenergie versorgt, wobei das Energie-Management-System mit mehreren Speicherzellen oder mit mehreren Gruppen besagter Speicherzellen derart einzeln elektrisch verbindbar ist, dass mehrere Speicherzellen bzw. mehrere Gruppen von Speicherzellen gemeinsam die Verbrauchsenergie für den Energieverbraucher mindestens teilweise bereitstellen.

Dokument DE 11 2014 007057 T5 beschreibt ein Energiespeichersystem mit mindestens zwei Batteriepacks. Ein Master-BMS berechnet anhand eines in einer Master-Steuerung des Master-BMS gespeicherten Algorithmus den Zustand jedes Batteriepacks und schaltet jedes Batteriepack zum Aufladen oder Entladen des Batteriepacks entsprechend ein oder aus.

Dokument US 2013/106357 A1 beschreibt ein Batteriepack für ein Elektrofahrzeug, umfassend eine erste Batterie, eine zweite Batterie und eine parallel angeordnete Last. Ein erstes Halbleiterschaltmodul ist in Reihe mit der ersten Batterie angeordnet und ermöglicht selektiv einen Stromfluss von der ersten Batterie zur Last und zurück. Ein zweites Halbleiterschaltmodul ist in Reihe mit der zweiten Batterie angeordnet und ermöglicht selektiv einen Stromfluss von der zweiten Batterie zur Last und zurück. Ein Batteriesteuermodul schaltet das erste und zweite Halbleiterschaltmodul basierend auf gespeicherten Lade- und/oder Nutzungsdaten der ersten und zweiten Batterie ein und aus.

Dokument DE 10 2014 216876 A1 beschreibt ein zumindest teilweise paralleles Ladeverfahren einer Ladegruppe, die aus zumindest einer Energiespeichereinrichtung einer Mehrzahl von an einer gemeinsamen Ladevorrichtung angeschlossenen, elektrochemischen Energiespeichereinrichtungen unter Verwendung mindestens einer elektrischen Eigenschaft der Mehrzahl von Energiespeichereinrichtungen bestimmt werden.

Dokument WO 2016/062284 A1 beschreibt eine Energieversorgungsvorrichtung mit mindestens zwei Energiespeichern. Ein erster Energiespeicher versorgt zunächst einen Elektromotor eines Fahrzeugs mit Strom. Wenn ein Energiepegel des ersten Energiespeichers unter einen vorbestimmten Wert fällt, wird eine Energiequelle für den Elektromotor vom ersten Energiespeicher auf den zweiten Energiespeicher umgeschaltet und der Elektromotor dann vom zweiten Energiespeicher mit Strom versorgt.

Es ist daher eine Aufgabe der Erfindung, ein Energiespeichersystem bereitzustellen, das im Betrieb im Vergleich zu herkömmlichen Energiespeichersystemen geringeren Alterungseffekten unterliegt. Eine weitere oder alternative Aufgabe der Erfindung ist, ein Energiespeichersystem zur Speicherung und Abgabe von elektrischer Energie, insbesondere elektrischer Traktionsenergie, bereitzustellen, das eine möglichst geringe zyklische (belastungsabhängige) Alterung aufweist.

Diese Aufgabe oder Aufgaben werden durch ein Energiespeichersystem mit den Merkmalen des Anspruchs 1 sowie durch ein Verfahren zu dessen Betrieb gemäß Anspruch 9 gelöst.

Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Es wird festgestellt, dass häufig Betriebssituationen auftreten, in denen die Leistungsanforderung an das Energiespeichersystem dergestalt ist, dass die benötigte Leistung bereits durch eine Teilmenge der Energiespeicher des Energiespeichersystems bereitgestellt werden kann. Der Erfindung liegt die technische Erkenntnis zu Grunde, dass es aus Lebensdauergründen von Vorteil ist, in derartigen Betriebssituationen eine geringere Anzahl an Energiespeichern des Energiespeichersystems mit höherer Strombelastung zu betreiben im Gegensatz zu einem Betrieb des Energiespeichersystem, bei dem alle oder eine hohe Anzahl von Energiespeichern mit einer geringeren Strombelastung entladen werden. Durch die dadurch erzielte Reduktion der zyklischen Belastungszeit jedes Einzelsystems (Energiespeichers) kann dies zu einer Erhöhung der Gesamtlebensdauer des Energiespeichersystems führen.

Gemäß einem ersten allgemeinen Gesichtspunkt der Erfindung wird ein Energiespeichersystem mit mehreren parallel verschalteten Energiespeichern bereitgestellt. Das Energiespeichersystem kann ein Traktionsenergiespeichersystem für ein Fahrzeug, insbesondere für ein Nutzfahrzeug sein. Das Energiespeichersystem kann ferner ein stationäres Energiespeichersystem sein.

Gemäß einem Aspekt umfasst das Energiespeichersystem mehrere elektrische Energiespeicher, wobei jeder der Energiespeicher elektrisch verbundene Zellmodule, die z. B. über Stromschienen verbunden sind, ein Schaltschütz, eine Energiespeicherhochvoltschnittstelle und eine das Schaltschütz steuernde Energiespeichersteuerung umfasst. Jedes der Zellmodule umfasst mehrere Speicherzellen und vorzugsweise eine Zellmodulsteuerung.

In jedem Energiespeicher ist das Schaltschütz dazu ausgebildet, die Zellmodule des Energiespeichers mit der Energiespeicherhochvoltschnittstelle des jeweiligen Energiespeichers nach Vorgabe der Energiespeichersteuerung in einer Schließstellung des Schaltschützes zu verbinden und in einer Offenstellung des Schaltschützes zu trennen. Beispielsweise kann das Schaltschütz dazu ausgebildet sein, Stromschienen des Energiespeichers mit der Energiespeicherhochvoltschnittstelle des jeweiligen Energiespeichers nach Vorgabe der Energiespeichersteuerung in einer Schließstellung des Schaltschützes zu verbinden und in einer Offenstellung des Schaltschützes zu trennen. Die Energiespeicher können auch mehrere Schaltstütze umfassen. Das Schaltschütz oder die Schaltschütze sind dazu ausgebildet, die Stromschienen des Energiespeichers mit der Hochvoltschnittstelle in einer Schließstellung des Schaltschützes oder der Schaltschütze zu verbinden und in einer Offenstellung des Schaltschützes oder der Schaltschütze zu trennen. Ein Energiespeicher kann als "getrennt" bezeichnet werden, wenn dessen Schaltschütz in der Offenstellung ist. Jeder der Energiespeicher kann in einem eigenen Gehäuse angeordnet sein.

Die Energiespeicherhochvoltschnittstellen der Energiespeicher sind parallel geschaltet. Das Energiespeichersystem ist somit modular aus einzelnen, parallel verschalteten Energiespeichern aufgebaut.

Das Energiespeichersystem umfasst ferner eine mit den Energiespeichersteuerungen in Wirkverbindung stehende Systemsteuerung, die dazu ausgebildet ist, gemäß einem Entlademodus, nachfolgend als erster Entlademodus bezeichnet, wiederholt die folgenden Schritte auszuführen:
- Bestimmung der Ladezustände der mehreren Energiespeicher;
- Festlegen einer ersten Entladegruppe durch Zuordnen mindestens eines der mehreren Energiespeicher zu der ersten Entladegruppe in Abhängigkeit von den bestimmten Ladezuständen der mehreren Energiespeicher. Hierbei erfolgt die Zuordnung derart, dass die erste Entladegruppe denjenigen Energiespeicher umfasst, der den höchsten Wert der bestimmten Ladezustände aufweist, und dass der Ladezustand jedes des mindestens einen Energiespeichers der ersten Entladegruppe größer ist als oder gleich wie die Ladezustände der nicht der ersten Entladegruppe zugeordneten Energiespeicher;
- Zuschalten lediglich der der ersten Entladegruppe zugeordneten Energiespeicher durch Schließen der entsprechenden Schaltschütze mittels der jeweiligen Energiespeichersteuerungen; und
- Trennen der zugeschalteten Energiespeicher durch Öffnen der jeweiligen Schaltschütze mittels der jeweiligen Energiespeichersteuerungen, nachdem der Ladezustand der der ersten Entladegruppe zugeordneten Energiespeicher auf einen Wert gefallen ist, der um einen vorbestimmten Wert (nachfolgend auch als Differenzbetrag bezeichnet) kleiner ist als ein Ladezustand desjenigen Energiespeichers, der von den nicht zugeschalteten Energiespeichern den höchsten Ladezustand aufweist.

Der erste Entlademodus dient zur Bereitstellung von Entladeleistung, beispielsweise zur Bereitstellung von elektrischer Traktionsenergie in bzw. für einen Fahrbetrieb des Fahrzeugs, falls das Energiespeichersystem ein Traktionsenergiespeichersystem eines Fahrzeugs ist. Dieser Entlademodus wird als erster Entlademodus bezeichnet, um diesen Entlademodus besser von einem nachfolgend noch näher beschriebenen weiteren Entlademodus (zweiter Entlademodus) unterscheiden zu können.

Gemäß dem ersten Entlademodus erfolgt somit ein wiederholtes Umschalten auf eine Entladegruppe, die dann aus anderen Energiespeichern zusammengesetzt ist, durch das Trennen der jeweils zuletzt zugeschalteten Energiespeicher und das Zuschalten mindestens eines Energiespeichers, der zu diesem Zeitpunkt von den nicht zugeschalteten Energiespeichern den höchsten Ladezustand aufweist. Anders ausgedrückt wird elektrische Energie (elektrische z. B. Traktionsenergie) im ersten Entlademodus nur jeweils von einer Teilmenge von Energiespeichern bereitgestellt, nämlich von den momentan der Entladegruppe zugeordneten und zugeschalteten Energiespeichern, die im Zuschaltzeitpunkt den höchsten Ladezustand aufweisen. Durch das wiederholte Durchlaufen der vorgenannten Schritte wird die Zusammensetzung der Entladegruppe bei jeder Wiederholung der Schritte neu festgelegt und geändert, so dass einerseits immer nur eine Teilmenge von Energiespeichern zugeschaltet ist und entladen wird und sich andererseits der Ladezustand aller oder zumindest der meisten Energiespeicher mit der Zeit stufenweise verringert.

Ein Entladevorgang gemäß dem ersten Entlademodus bietet somit den besonderen Vorzug, dass die benötigte elektrische Leistung durch eine Teilmenge der parallel verschalteten Energiespeicher dargestellt wird, die entsprechend mit höherer Stromstärke betrieben werden müssen als ein Betrieb, bei dem alle Energiespeicher mit entsprechend kleinerer Stromstärke entladen werden. Wie vorstehend bereits erwähnt, ist dies zur Verbesserung der Lebensdauer bzw. zur Verlangsamung der zyklischen Alterung der Energiespeicher von Vorteil. Durch Reduktion der zyklischen Belastungszeit jedes Einzelsystems führt dies zu einer Erhöhung der Gesamtlebensdauer des Energiespeichersystems.

Eine besonderer Vorzug des vorgeschlagenen ersten Entlademodus ist ferner, dass hierdurch auch ohne Einsatz eines DC/DC-Wandlers zur Kopplung des Energiespeichers an das Leistungsnetz Umschaltunterbrechungen zum Wechseln des zugeschalteten Energiespeichers während des Fahrbetriebs vermieden werden können. Der Grund ist, dass die jeweils zugeschalteten Energiespeicher der ersten Entladegruppe immer nur so lange entladen werden, bis deren Ladezustand auf den Wert gefallen ist, der um den vorbestimmten Wert kleiner ist als ein Ladezustand desjenigen nicht zugeschalteten Energiespeichers, der von den nicht zugeschalteten Energiespeichern den höchsten Ladezustand aufweist. Dieser Energiespeicher wird dann mit ggf. weiteren bisher nicht zugeschalteten Energiespeichern, deren Ladezustand höher ist als die aktuellen Ladezustände der Energiespeicher der bisherigen ersten Entladegruppe, als neue erste Entladegruppe festgelegt und zugeschaltet.

Dadurch können aus den unterschiedlichen Ladezuständen resultierende Spannungsunterschiede beim Wechseln der zugeschalteten Energiespeicher begrenzt werden und somit vorteilhafterweise Ausgleichsströme bei der Umschaltung zwischen diesen Energiespeichern möglichst vermieden oder zumindest reduziert werden.

Entsprechend wird dann diese neu festgelegte erste Entladegruppe ebenfalls wiederum so lange entladen, bis deren Ladezustand (z. B. der durchschnittliche Ladezustand der ersten Entladegruppe) auf einen Ladezustand gefallen ist, der um den vorbestimmten Wert kleiner ist als ein Ladezustand desjenigen nicht zugeschalteten Energiespeichers, der von den nicht zugeschalteten Energiespeichers den höchsten Ladezustand aufweist usw. Gemäß diesem Entlademodus erfolgt somit ein sequentieller Betrieb der einzelnen Energiespeicher oder einzelner Gruppen von Energiespeichern, bei dem die Ladezustände der einzelnen Energiespeicher kaskadenartig und zeitlich stufenartig abnehmen.

Vorzugsweise wird der erste Entlademodus nur durchgeführt, falls eine Leistungsanforderung an das Energiespeichersystem kleiner als ein vorbestimmter Leistungsschwellenwert ist, der so gewählt ist, dass Leistungsanforderungen unterhalb dieses Leistungsschwellenwerts lediglich von einer Teilmenge der Energiespeicher des Energiespeichersystems bereitgestellt werden kann. Die Entladegruppe kann lediglich einen oder kann mehrere Energiespeicher umfassen. Ferner kann eine Mindestanzahl und/oder eine Maximalanzahl für die Anzahl von Energiespeichern in der Entladegruppe für den ersten Entlademodus vorgegeben werden.

Beispielsweise kann das Festlegen der ersten Entladegruppe umfassen: Bestimmen der N Energiespeicher, die die N höchsten Werte der bestimmten Ladezustände aufweisen, wobei N eine vorbestimmte oder eine in Abhängigkeit von den bestimmten Ladezuständen und/oder in Abhängigkeit von einer Leistungsanforderung an das Energiespeichersystem festgelegte natürliche Zahl ≥ 1 ist, und Festlegen der bestimmen N Energiespeicher als eine Entladegruppe. N ist kleiner als die Gesamtanzahl der Energiespeicher des Energiespeichersystems.

Hierbei kann die Zahl N in Abhängigkeit von einer Leistungsanforderung an das Energiespeichersystem festgelegt werden, insbesondere derart, dass N die kleinste Zahl an Energiespeichern festlegt, mit denen die aktuelle Leistungsanforderung als Entladeleistung bereitgestellt werden kann.

Der Differenzbetrag kann lediglich beispielhaft im Bereich von 5 bis 15 in Bezug auf den Ladezustand in Prozent liegen. Hat der Differenzbetrag den Wert von 10 bedeutet dies, dass ein zugeschalteter Energiespeicher, der beim Zuschalten einen Ladezustand von 88 % aufweist, wobei der nicht zugeschaltete Energiespeicher mit dem höchsten Ladezustand einen Ladezustand von 80 % aufweist, so lange entladen wird, bis dessen Ladezustand auf 70 % (70 % = 80 % - 10 %) gefallen ist.

Gemäß einem weiteren Aspekt kann die erste Entladegruppe nur Energiespeicher mit gleichem Ladezustand enthalten, d. h., diejenigen, die zum Zeitpunkt des Festlegens der (Zusammensetzung der) ersten Entladegruppe den höchsten Ladezustand aufweisen. Alternativ kann die erste Entladegruppe diejenigen Energiespeicher enthalten, deren Ladezustand sich nicht um mehr als einen vorbestimmten Differenzbetrag vom höchsten Ladezustand aller Energiespeicher unterscheidet. Hierbei kann die Zahl der Energiespeicher in der Entladegruppe auf die Zahl N, wie vorstehend beschrieben, begrenzt sein.

Anders ausgedrückt kann die Systemsteuerung des Energiespeichersystems dazu ausgebildet sein, nur Energiespeicher miteinander parallel zu schalten, deren Differenz des Ladezustands oder der Leerlaufspannung kleiner als ein bestimmter Grenzwert ist, um Ausgleichströme zwischen diesen Energiespeichern möglichst zu reduzieren.

Ein weiterer Aspekt sieht vor, dass, nachdem der Ladezustand der zugeschalteten Energiespeicher der ersten Entladegruppe auf den Wert gefallen ist, der um einen vorbestimmten Wert kleiner ist als ein Ladezustand desjenigen Energiespeichers, der von den nicht zugeschalteten Energiespeichers den höchsten Ladezustand aufweist, ein Umschalten gemäß dem ersten Entlademodus auf eine neu festgelegte Entladegruppe mit zumindest diesem Energiespeicher durch das Trennen der zuletzt zugeschalteten Energiespeicher und das Zuschalten der neu festgelegten Entladegruppe erst bei Erfüllung einer vorbestimmten Umschaltvoraussetzung erfolgt. Anders ausgedrückt muss, nachdem der Ladezustand der zugeschalteten Energiespeicher auf den Wert gefallen ist, der um einen vorbestimmten Differenzbetrag kleiner ist als ein Ladezustand desjenigen Energiespeichers, der von den nicht zugeschalteten Energiespeichern den höchsten Ladezustand aufweist, zum Umschalten zusätzlich die vorbestimmte Umschaltvoraussetzung erfüllt sein. Dies bietet den Vorzug, dass ein Umschalten erst bei Vorliegen geeigneter Betriebs- bzw. Fahrsituationen vorgenommen werden kann, in denen möglicherweise störende Umschalteffekte (z. B. Unterbrechung der elektrischen Antriebsleistung) möglichst wenig zum Tragen kommen.

Gemäß eines weiteren Aspekts ist die vorbestimmte Umschaltvoraussetzung erfüllt falls das Fahrzeug zum Stillstand gekommen ist, z. B. während Fahrpausen und/oder falls ein Wert einer Größe, die ein Maß für die aktuelle Leistungsanforderung oder Fahrbelastung ist, einen vorbestimmten Belastungsschwellenwert unterschreitet, d. h. bei geringer Belastung während der Fahrt. Eine derartige Größe kann z. B. das Fahrerwunschmoment oder die Drehmomentvorgabe für den Antriebsmotor sein. In diesen Betriebs- bzw. Fahrsituationen sind die Zugunterbrechungen durch das Umschalten nicht vorhanden oder zumindest weniger störend.

Eine mögliche Weiterbildung kann vorsehen, dass die Systemsteuerung dazu ausgebildet sein kann, die Umschaltung auch bei Nicht-Erfüllung der Umschaltvoraussetzung durchzuführen, falls die Umschaltvoraussetzung nach Ablauf einer vorbestimmten Zeitdauer nicht erfüllt ist, nachdem der Ladezustand des zugeschalteten Energiespeichers auf einen Wert gefallen ist, der um einen vorbestimmten Differenzbetrag kleiner ist als ein Ladezustand desjenigen Energiespeichers ist, der von den nicht zugeschalteten Energiespeichers den höchsten Ladezustand aufweist. Dadurch kann ein zu starkes Entladen der momentan zugeschalteten Energiespeicher vermieden werden.

Gemäß eines weiteren Aspekts ist ein zweiter Entlademodus vorgesehen bei dem nicht wie beim ersten Entlademodus wechselnde Gruppen von Energiespeichern abwechselnd entladen werden, sondern bei dem ausgehend von dem Energiespeicher oder den Energiespeichern mit höchstem Ladezustand, der bzw. die zuerst entladen wird bzw. werden, nacheinander weitere Energiespeicher nach Maßgabe ihres Ladungszustand zum Entladen aufgesammelt, d. h. zugeschaltet, werden. Mithilfe des zweiten Entlademodus können beispielsweise die Ladezustände von Energiespeichern gezielt angeglichen werden, um Gruppen von Energiespeichern zu bilden, die sich dann, zusammengefasst als eine erste Entladegruppe, für die Durchführung des ersten Entlademodus eignen. Der zweite Entlademodus eignet sich auch zur Maximierung der Reichweite, insbesondere dann, wenn die Ladezustände aller Energiespeicher hinreichend stark abgenommen haben.

Die Systemsteuerung ist dazu ausgebildet, gemäß dem zweiten Entlademodus die folgenden Schritte auszuführen:
- Bestimmung der Ladezustände der mehreren Energiespeicher;
- Hinzufügen mindestens eines der mehreren Energiespeicher zu einer Entladegruppe (nachfolgend als zweite Entladegruppe bezeichnet) in Abhängigkeit von den bestimmten Ladezuständen der mehreren Energiespeicher, derart, dass die zweite Entladegruppe denjenigen Energiespeicher umfasst, der den höchsten Wert der bestimmten Ladezustände aufweist, und dass der Ladezustand jedes des mindestens einen Energiespeichers der zweiten Entladegruppe größer ist als oder gleich wie die Ladezustände der nicht der zweiten Entladegruppe zugeordneten Energiespeicher;
- Zuschalten lediglich des mindestens einen der zweiten Entladegruppe zugeordneten, noch nicht zugeschalteten Energiespeichers durch Schließen der entsprechenden Schaltschütze mittels der jeweiligen Energiespeichersteuerungen; und
- Anschließendes Hinzufügen weiterer bisher nicht zugeschalteter Energiespeicher zu der zweiten Entladegruppe, die durch Schließen der entsprechenden Schaltschütze zugeschaltet werden, jeweils dann, jedoch nicht unter eine Ausführungsform der Ansprüche fallend, wenn deren Ladezustand mit einem durch die Ladezustände der bereits zugeschalteten Energiespeicher der zweiten Entladegruppe definierten Bereich übereinstimmt. Eine Ausführungsform sieht vor, dass als nächstes der Energiespeicher zusätzlich zugeschaltet wird, der von den bisher nicht zugeschalteten Energiespeichern den höchsten Ladezustand aufweist, und wobei der Zeitpunkt der Zuschaltung dann erfolgt, wenn die Ladezustände der bereits zugeschalteten Energiespeicher auf diesen Ladezustand gefallen sind.

Das Hinzufügen eines weiteren, bisher nicht zugeschalteten Energiespeichers zu der zweiten Entladegruppe kann dann erfolgen, wenn ein Ladezustand der Energiespeicher der zweiten Entladegruppe (z. B. ein durchschnittlicher Ladezustand der Energiespeicher der zweiten Entladegruppe) einen Ladezustand eines bisher nicht zugeschalteten Energiespeichers erreicht oder deren Ladezustände sich nicht um mehr als einen vorbestimmte Wert vom Ladezustand eines bisher nicht zugeschalteten Energiespeichers unterscheidet. Auf diese Weise können hohe Ausgleichströme beim Zuschalten vermieden werden und Ladezustände unterschiedlicher Energiespeicher gezielt angeglichen werden.

Gemäß einem weiteren Aspekt ist die Systemsteuerung dazu ausgebildet, wahlweise einen Entladevorgang gemäß dem ersten Entlademodus oder gemäß dem zweiten Entlademodus durchzuführen.

Eine Weiterbildung hiervon sieht vor, dass die Systemsteuerung dazu ausgebildet ist, von einem Entladevorgang gemäß dem ersten Entlademodus zu einem Entladevorgang gemäß dem zweiten Entlademodus zu wechseln, falls der Ladezustand aller Energiespeicher jeweils kleiner als ein vorbestimmter Schwellenwert ist. Hierbei können dann nacheinander alle Energiespeicher sukzessive entsprechend ihres Ladezustandes "aufgesammelt", d. h. zugeschaltet werden. Dies ist vorteilhaft zur Maximierung der Reichweite.

Die Systemsteuerung kann dazu ausgebildet sein, einen Entladevorgang mit einem zweiten Entlademodus zu starten, falls und bis eine Anzahl der Energiespeicher, die den höchsten Ladezustand aufweisen, eine vorbestimmte Mindestanzahl erreicht, und bei Erreichen der Mindestanzahl zum ersten Entlademodus zu wechseln. Die Mindestanzahl kann die Anzahl der Energiespeicher darstellen, die im ersten Entlademodus eine Entladegruppe bilden soll. Falls lediglich beispielhaft im ersten Entlademodus immer zwei Energiespeicher gleichzeitig entladen werden sollen, aber nur ein Energiespeicher den aktuellen höchsten Ladezustand aufweist, kann mittels des zweiten Entlademodus der Energiespeicher mit höchstem Ladezustand auf den Ladezustand des Energiespeichers mit zweithöchstem Ladezustand gebracht werden, die dann anschließend zusammen gemäß dem ersten Entlademodus entladen werden.

Gemäß einem weiteren Aspekt kann die Systemsteuerung dazu ausgebildet sein, gemäß einem Lademodus zum Aufladen des Energiespeichersystems alle Energiespeicher durch Schließen der Schaltschütze, insbesondere nacheinander oder gleichzeitig, zuzuschalten. Korrespondierend zum zweiten Entlademodus kann auch für das Laden ein entsprechender Lademodus vorgesehen sein, bei dem Energiespeicher nach Maßgabe ihres Ladezustands nacheinander zugeschaltet werden, angefangen mit dem/den Energiespeicher/n mit kleinstem Ladezustand, wobei weitere Energiespeicher jeweils dann zugeschaltet werden, wenn der/die zugeschaltete/n Energiespeicher den Ladezustand dieses nicht zugeschalteten Energiespeichers erreicht/erreichen. Beispielsweise kann die Systemsteuerung gemäß einem Lademodus zum Aufladen des Energiespeichersystems dazu ausgebildet sein, die folgenden Schritte auszuführen:
- Bestimmung der Ladezustände der mehreren Energiespeicher;
- Festlegen einer Ladegruppe durch Zuordnen mindestens eines der mehreren Energiespeicher zu der Ladegruppe in Abhängigkeit von den bestimmten Ladezuständen der mehreren Energiespeicher, derart, dass die Ladegruppe denjenigen Energiespeicher umfasst, der den kleinsten Wert der bestimmten Ladezustände aufweist, und dass der Ladezustand jedes des mindestens einen Energiespeichers der Ladegruppe kleiner ist als oder gleich wie die Ladezustände der nicht der Ladegruppe zugeordneten Energiespeicher;
- Zuschalten lediglich der der Ladegruppe zugeordneten, noch nicht zugeschalteten Energiespeicher durch Schließen der entsprechenden Schaltschütze mittels der jeweiligen Energiespeichersteuerungen; und
- anschließend Hinzufügen weiterer, bisher nicht zugeschalteter Energiespeicher zu der Ladegruppe durch Schließen der entsprechenden Schaltschütze jeweils dann, wenn deren Ladezustand mit einem durch die Ladezustände der bereits zugeschalteten Energiespeicher der Ladegruppe definierten Bereich übereinstimmt.

Das Zuschalten weiterer bisher nicht zugeschalteter Energiespeicher wird so lange durchgeführt, bis nach Maßgabe des Ladezustandes alle Energiespeicher zugeschaltet sind.

Die Erfindung betrifft ferner ein Fahrzeug, das ein Traktionsenergiespeichersystem umfasst, wie in diesem Dokument beschrieben. Das Fahrzeug kann ein Landfahrzeug, ein Wasserfahrzeug (beispielsweise ein Schiff oder Unterseeboot) oder ein Luftfahrzeug sein. Alternativ oder in Kombination kann das Fahrzeug ein Nutzfahrzeug (beispielsweise ein Lastkraftwagen zur Güterbeförderung und/oder ein Bus zur Personenbeförderung) oder ein Personenkraftwagen sein.

Gemäß einem zweiten allgemeinen Gesichtspunkt wird ein Verfahren zum Betrieb eines Energiespeichersystems, insbesondere eines Traktionsenergiespeichersystems, beispielsweise für ein Fahrzeug, bereitgestellt. Das Verfahren zeichnet sich dadurch aus, dass gemäß einem ersten Entlademodus wiederholt die folgenden Schritte ausgeführt werden:
- Bestimmung der Ladezustände der mehreren Energiespeicher;
- Festlegen einer ersten Entladegruppe durch Zuordnen mindestens eines der mehreren Energiespeicher zu der ersten Entladegruppe in Abhängigkeit von den bestimmten Ladezuständen der mehreren Energiespeicher, derart, dass die erste Entladegruppe denjenigen Energiespeicher umfasst, der den höchsten Wert der bestimmten Ladezustände aufweist, und dass der Ladezustand jedes des mindestens einen Energiespeichers der ersten Entladegruppe größer ist als oder gleich wie die Ladezustände der nicht der ersten Entladegruppe zugeordneten Energiespeicher;
- Zuschalten lediglich der der ersten Entladegruppe zugeordneten Energiespeicher durch Schließen der entsprechenden Schaltschütze mittels der jeweiligen Energiespeichersteuerungen; und
- Trennen der zugeschalteten Energiespeicher durch Öffnen der jeweiligen Schaltschütze mittels der jeweiligen Energiespeichersteuerungen, nachdem der Ladezustand der der ersten Entladegruppe zugeordneten Energiespeicher auf einen Wert gefallen ist, der um einen vorbestimmten Wert kleiner ist als ein Ladezustand desjenigen Energiespeichers, der von den nicht zugeschalteten Energiespeichern den höchsten Ladezustand aufweist, wobei, nachdem der Ladezustand der zugeschalteten Energiespeicher der ersten Entladegruppe auf den Wert gefallen ist, der um einen vorbestimmten Wert kleiner ist als ein Ladezustand desjenigen Energiespeichers, der von den nicht zugeschalteten Energiespeichers den höchsten Ladezustand aufweist, ein Umschalten gemäß dem ersten Entlademodus auf eine neu festgelegte Entladegruppe mit zumindest diesem Energiespeicher durch das Trennen der zuletzt zugeschalteten Energiespeicher und das Zuschalten der neu festgelegten Entladegruppe erst bei Erfüllung einer vorbestimmten Umschaltvoraussetzung erfolgt, wobei die vorbestimmte Umschaltvoraussetzung erfüllt ist, falls a) das Fahrzeug zum Stillstand gekommen ist; oder b) falls ein Wert einer Größe, die ein Maß für die aktuelle Leistungsanforderung oder Fahrbelastung ist, einen vorbestimmten Belastungsschwellenwert unterschreitet,wobei die Systemsteuerung ferner dazu ausgebildet ist, gemäß einem zweiten Entlademodus die folgenden Schritte auszuführen:
- Bestimmung der Ladezustände der mehreren Energiespeicher;
- Hinzufügen mindestens eines der mehreren Energiespeicher zu einer zweiten Entladegruppe in Abhängigkeit von den bestimmten Ladezuständen der mehreren Energiespeicher, derart, dass die Entladegruppe denjenigen Energiespeicher umfasst, der den höchsten Wert der bestimmten Ladezustände aufweist, und dass der Ladezustand jedes des mindestens einen Energiespeichers der zweiten Entladegruppe größer ist als oder gleich wie die Ladezustände der nicht der zweiten Entladegruppe zugeordneten Energiespeicher;
- Zuschalten lediglich des mindestens einen der zweiten Entladegruppe zugeordneten, noch nicht zugeschalteten Energiespeichers durch Schließen der entsprechenden Schaltschütze mittels der jeweiligen Energiespeichersteuerungen; wobei anschließend weitere bisher nicht zugeschaltete Energiespeicher zu der zweiten Entladegruppe jeweils dann hinzugefügt und durch Schließen der entsprechenden Schaltschütze zugeschaltet werden, wobei als nächstes der Energiespeicher zusätzlich zugeschaltet wird, der die von den bisher nicht zugeschalteten Energiespeichern den höchsten Ladezustand aufweist, und wobei der Zeitpunkt der Zuschaltung dann erfolgt, wenn die Ladezustände der bereits zugeschalteten Energiespeicher auf diesen Ladezustand gefallen sind, wobei die Systemsteuerung ferner dazu ausgebildet ist, wahlweise einen Entladevorgang gemäß dem ersten Entlademodus oder gemäß dem zweiten Entlademodus durchzuführen.

Zur Vermeidung von Wiederholungen sollen rein vorrichtungsgemäß offenbarte Merkmale auch als verfahrensgemäß offenbart gelten und beanspruchbar sein. Die vorgenannten Aspekte und erfindungsgemäßen Merkmale, insbesondere im Hinblick auf die Ausbildung des Energiespeichersystem und der Systemsteuerung, gelten somit auch für das Verfahren.

Der Begriff "Ladezustand" (engl. state of charge (SOC)) ist in diesem Dokument breit auszulegen. Insbesondere soll darunter jeder Parameter, wie z. B. die Leerlaufspannung (auch als "Open-Circuit Voltage" oder OCV bezeichnet) bzw. Parameter-Gruppe verstanden werden, der bzw. die ein Maß für den Ladezustand des Energiespeichers angibt bzw. aus dem bzw. aus der der Ladezustand ableitbar ist.

Beispielsweise können die Zellmodulsteuerungen dazu ausgebildet sein, die Speicherzellen im jeweiligen Zellmodul betreffende Messwerte auszugeben, und die Energiespeichersteuerungen dazu ausgebildet sein, abhängig von den Messwerten der Zellmodule im jeweiligen Energiespeicher einen Speicherzustand, insbesondere einen Ladezustand des Energiespeichers, zu bestimmen. Beispielsweise kann jede Energiespeichersteuerung ausgebildet sein, auf Basis der jeweiligen Zellzustände (beispielsweise Zellspannungen) einen Zellladungszustand jeder Speicherzelle (beispielsweise durch Abgleich mit einer hinterlegten Kurve oder tabellierten Relation zwischen Leerlaufspannung (auch als "Open-Circuit Voltage" oder OCV bezeichnet) und Ladezustand) bestimmen. Alternativ kann jede Zellmodulsteuerung die Zellladezustände seiner Speicherzellen bestimmen und als Zellzustand ausgeben. Aus diesen Zellladezuständen kann, z. B. durch Mittelwertbildung, ein Speicherladezustand des jeweiligen Energiespeichers bestimmt werden. Jede Energiespeichersteuerung kann dazu ausgebildet sein, an die Systemsteuerung ein Minimum und/oder ein Maximum der Zellspannungen der Speicherzellen im jeweiligen Energiespeicher sowie den Speicherladezustand auszugeben.

Vorstehend beschriebene Merkmale, Aspekte und Ausführungsformen sind in jeder Kombination realisierbar. Weitere Merkmale und Vorteile der Erfindung werden im Folgenden unter Bezugnahme auf die beigefügten Zeichnungen beschrieben. Es zeigen:
- Figur 1: ein schematisches Blockschaltbild eines ersten Ausführungsbeispiels eines Traktionsenergiespeichersystems für ein Fahrzeug;
- Figur 2: ein schematisches Blockschaltbild eines zweiten Ausführungsbeispiels eines Traktionsenergiespeichersystems für ein Fahrzeug;
- Figur 3: ein schematisches Blockschaltbild eines dritten Ausführungsbeispiels eines Traktionsenergiespeichersystems für ein Fahrzeug;
- Figur 4: ein Ablaufdiagramm zur Illustration eines ersten Entlademodus gemäß eines Ausführungsbeispiels;
- Figur 5: ein Ablaufdiagramm zur Illustration eines weiteren Ausführungsbeispiels;
- Figur 6: ein Ablaufdiagramm zur Illustration eines zweiten Entlademodus gemäß eines Ausführungsbeispiels;
- Figur 7A bis 7C: eine schematische Illustration weiterer Ausführungsbeispiele zur Kombination des ersten Entlademodus und des zweiten Entlademodus; und
- Figur 8: eine schematische Illustration eines weiteren Ausführungsbeispiels.

Gleiche oder funktional äquivalente Elemente sind in allen Figuren mit denselben Bezugszeichen bezeichnet und zum Teil nicht gesondert beschrieben.

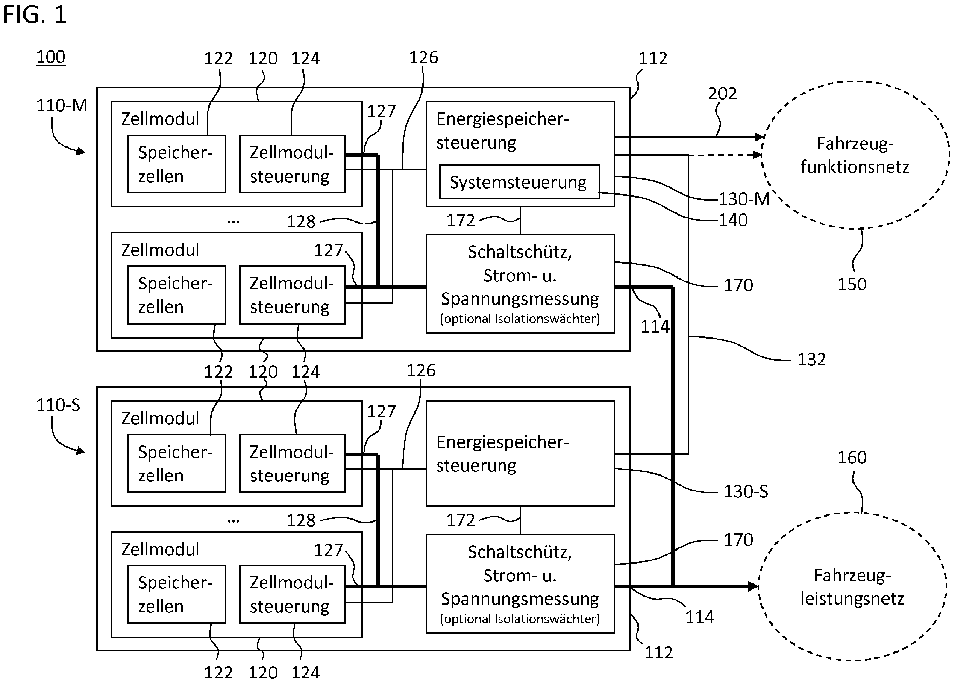

Figur 1 zeigt ein schematisches Blockschaltbild eines allgemein mit Bezugszeichen 100 bezeichneten Energiespeichersystems. Gemäß einem hervorgehobenen Ausführungsbeispiel handelt es sich dabei um ein Traktionsenergiespeichersystems (TES-Systems) für ein Fahrzeug, beispielsweise ein Nutzfahrzeug. Vorstehend wurde jedoch bereits ausgeführt, dass das Energiespeichersystem auch ein stationäres Energiespeichersystems sein kann. Das TES-System 100 umfasst mindestens zwei Energiespeicher 110. Jeder Energiespeicher 110 umfasst jeweils mehrere Zellmodule 120 und eine Energiespeichersteuerung 130.

Jedes der Zellmodule 120 umfasst mehrere Speicherzellen 122 und eine Zellmodulsteuerung 124. Jede Zellmodulsteuerung 124 erfasst Messwerte betreffend die jeweils zugeordneten Speicherzellen 122. Zum Beispiel erfasst die Zellmodulsteuerung 124 eine Spannung und/oder eine Temperatur der Speicherzellen 122 im jeweiligen Zellmodul 120. Jede der Zellmodulsteuerungen 124 ist dazu ausgebildet, die Messwerte auf einem internen Datenbus 126 auszugeben. Der interne Datenbus 126 des Zellmoduls 120 kann ein serieller Bus, beispielsweise für ein Controller Area Network (CAN), sein.

Jede der Energiespeichersteuerungen 130 ist dazu ausgebildet, die Messwerte von den Zellmodulen 120 im jeweiligen Energiespeicher 110 zu erhalten. Hierzu ist jede Energiespeichersteuerung 110 mit dem jeweiligen internen Datenbus 126 verbunden.

Jede der Energiespeichersteuerungen 130 ist ferner dazu ausgebildet, abhängig von den erhaltenen Messwerten ein Signal zu erzeugen. Zur Ausgabe des Signals oder anderer Signale ist die Energiespeichersteuerung 130 mit einem externen Datenbus 132 verbunden. Der externe Datenbus 132 des TES-Systems 100 kann ein serieller Bus sein, beispielsweise ein weiterer CAN-Bus. Der externen Datenbus 132 kann ausschließlich zur Kommunikation zwischen den Energiespeichern 110 (bzw. deren Energiespeichersteuerungen 130) ausgebildet sein.

Die Energiespeicher 110 sind jeweils in einem eigenen Gehäuse 112 angeordnet. Der interne Datenbus 126 verläuft innerhalb des jeweiligen Gehäuses 112. Der externe Datenbus 132 verläuft außerhalb der Gehäuse 112.

Das TES-System 100 umfasst ferner eine Systemsteuerung 140. Die Systemsteuerung 140 kann dazu ausgebildet sein, Signale von den Energiespeichersteuerungen 130 zu erhalten, auf Grundlage der erhaltenen Signale ein Systemsignal zu erzeugen und das Systemsignal an ein Funktionsnetz 150 des Fahrzeugs auszugeben. Das Funktionsnetz 150 kann ein Niederspannungsbordnetz und/oder ein Bussystem zur Kommunikation zwischen Fahrzeugfunktionen umfassen. Das Niederspannungsbordnetz kann eine Versorgungsspannung von 24 Volt bereitstellen.

In einer ersten Variante kann der externen Datenbus 132 ausschließlich zur Kommunikation zwischen den Energiespeichern 110 (bzw. deren Energiespeichersteuerungen 130) ausgebildet sein. Das Funktionsnetz 150 kann über eine eigene Schnittstelle und/oder eine eigene Busanbindung 202 mit der Systemsteuerung 140 verbunden sein. Hierzu kann ein eigener Bus (beispielsweise ein eigener CAN-Bus) zur Fahrzeugkommunikation vorgesehen sein, der unabhängig vom externen Datenbus 132 arbeitet.

In einer zweiten Variante kann der externe Datenbus 132 (z. B. anstatt der separaten Busanbindung 202 oder ergänzend hierzu) mit dem Funktionsnetz 150 verbunden sein (gestrichelter Pfeil).

In beiden Varianten kann das TES-System 100 eine einheitliche Fahrzeugschnittstelle zum Funktionsnetz 150 des Fahrzeugs umfassen, die unabhängig von der Anzahl der eingesetzten und miteinander verbundenen Energiespeicher 110 ist. Insbesondere bei der ersten Variante kann die Fahrzeugschnittstelle auf eine physischen Ebene (z. B. hinsichtlich Steckverbindung und/oder Signalverlauf) oder einer Bitübertragungsschicht (z. B. hinsichtlich eines Kommunikationsprotokolls) unabhängig von einer veränderlichen Zusammensetzung der vom TES-System 100 umfassten Energiespeicher 110 sein.

Die Systemsteuerung 140 kann in einem Energiespeicher 110, beispielsweise in einer der Energiespeichersteuerungen 130, implementiert sein. Alternativ oder ergänzend kann die Systemsteuerung 140 außerhalb der Energiespeicher 110 implementiert sein, beispielsweise als eine eigene Vorrichtung in einem separaten Gehäuse oder eine Komponente des Funktionsnetzes 150. Ein Energiespeicher 110, welcher die Funktion der Systemsteuerung 140 ausführt, wird auch als Master-Energiespeicher 110-M bezeichnet. Der oder die Energiespeicher 110, welche nicht die Funktion der Systemsteuerung 140 ausführen, werden auch als Slave-Energiespeicher 110-S bezeichnet. Entsprechende Bezeichnungen gelten für die jeweiligen Energiespeichersteuerungen 130-M bzw. 130-S.

Die Systemsteuerung 140 kann dazu ausgebildet sein, die Signale von den Energiespeichersteuerungen 130-S über den externen Datenbus 132 zu erhalten. Das Systemsignal kann von der Systemsteuerung 140 an das Funktionsnetz 150 über einen direkten Anschluss (beispielsweise den Bus 202) der Systemsteuerung 140 an das Funktionsnetz 150 ausgegeben werden. Alternativ oder ergänzend, kann das Systemsignal an das Funktionsnetz 150 über den externen Datenbus 132 ausgegeben werden. Hierzu ist das Funktionsnetz 150 (beispielsweise direkt oder über ein Gateway) an den externen Datenbus 132 angeschlossen.

Die Speicherzellen 122 eines Zellmoduls 120 sind (beispielsweise in Reihe) zusammengeschalten. Die aus der Zusammenschaltung resultierenden Anschlussklemmen 127 sind über Stromschienen 128 verbunden. Die Stromschienen 128 können aus Aluminium oder einem anderen leitenden Material gefertigt sein.

Die aus dem Verbund der Zellmodule 120 jedes Energiespeichers 110 resultierenden Pole bilden eine Energiespeicherhochvoltschnittstelle 114 (nachfolgend: Hochvoltschnittstelle). Die Hochvoltschnittstellen 114 können parallel oder in Reihe verschaltet sein und mit einem Leistungsnetz 160 des Fahrzeugs verbunden oder verbindbar sein. Das Leistungsnetz 160 kann ein Hochvoltbordnetz des Fahrzeugs umfassen. Ein Antriebsstrang des Fahrzeugs kann mit dem Leistungsnetz 160 verbunden sein zur Entnahme der im TES-System 100 gespeicherten Energie und/oder zum Laden des TES-Systems 100, beispielsweise bei einem rekuperativen Bremsvorgang. Der Antriebsstrang kann einen Kurbelwellen-Startergenerator oder eine elektrische Maschine als primärer Antrieb (ggf. angeschlossen über einen Inverter) umfassen. Das Leistungsnetz 160 kann auch als Traktionsnetz bezeichnet werden. Das Leistungsnetz 160 kann eine Spannung von mindestens 60 Volt, beispielsweise zwischen 540 Volt und 738 Volt, bereitstellen. Alternativ oder ergänzend kann das Leistungsnetz 160 jedes Hochvolt-Bordnetz im Sinne des Fahrzeugbaus sein. Eine Topologie des Leistungsnetzes 160 und/oder dessen Komponenten können das Leistungsnetz 160 gegenüber einem Niedervoltnetz (von beispielsweise 24 Volt, insbesondere dem Niederspannungsbordnetz) abgrenzen. Die Topologie kann einer bekannten Fahrzeugtopologie für Hybrid-, Plug-In- oder Elektrofahrzeuge entsprechen oder angepasst sein. Die Komponenten können einen Umrichter (beispielsweise den Inverter oder Wechselrichter) für Fahrantriebe, das TES-System 100, eine oder mehrere elektrische Maschinen, Nebenaggregate und/oder einen Kabelbaum umfassen.

Vorzugsweise ist in jedem Energiespeicher 110 mindestens ein Schaltschütz 170 zwischen den Zellmodulen 120 und dem Leistungsnetz 160 angeordnet. Das Schaltschütz 170 wird beziehungsweise die Schaltschütze 170 werden von der Energiespeichersteuerung 130 im gleichen Energiespeicher 110 über die mit Bezugszeichen 172 gezeigte Steuerleitung zum wahlweisen Trennen des jeweiligen Energiespeichers 110 vom Leistungsnetz 160 gesteuert. Das Schaltschütz 170 kann Teil einer Schützbox sein, die ferner die elektrische Isolation der Stromschienen 128 (z. B. gegenüber einem Referenzpotential) überwacht, den über die Stromschienen 128 fließenden Strom misst und/oder die an den Stromschienen 128 anliegende Spannung misst (beispielsweise bei geöffnetem Schaltschütz die Leerlaufspannung).

In einem Betriebszustand des TES-Systems 100 können die Schaltschütze 170 der zugeschalteten (und ggf. funktionsfähigen) Energiespeicher 110 geschlossen sein (Schließstellung). Durch Öffnen des Schaltschützes 170 oder der Schaltschütze 170 (Offenstellung) kann der entsprechende Energiespeicher 110 im Betriebszustand des TES-Systems 100 aus dem Verbund des TES-Systems 100 isoliert werden, beispielsweise bei einem unzulässigen Speicherzustand oder zur Messung der Leerlaufspannung. Vermittels der jeweiligen Energiespeichersteuerung 130 kann die Systemsteuerung 140 in einem Ruhezustand des TES-Systems 100 die Offenstellung der Schaltschütze 170 aller Energiespeicher 110 bewirken.

Weiterhin kann ein Vorladeschaltschütz (oder kurz: Vorladeschütz) und ein mit dem Vorladeschaltschütz in Reihe geschalteter Vorladewiderstand in jedem Energiespeicher 110 parallel zu einem der Schaltschütze 170 (die auch als Hauptschütze bezeichnet werden können) verbaut sein. Der Vorladewiderstand kann ein Kaltleiter oder PTC-Widerstand sein. Unmittelbar vor der Schließstellung (z. B. für den Betriebszustand) kann die Energiespeichersteuerung 130 den Vorladeschaltschütz schließen. Die Energiespeichersteuerung 130 kann die Schließstellung der Schaltschütze 170 bewirken, sobald einen Spannungsdifferenz am Vorladewiderstand einen Schwellwert unterschreitet.

Die Systemsteuerung 140 ist ferner zur bidirektionalen Kommunikation mit dem Funktionsnetz 150 des Fahrzeugs ausgebildet. Beispielsweise können die Systemsignale in Reaktion auf ein Fahrzeugsignal (vom Funktionsnetz 150 des Fahrzeugs) erzeugt und ausgegeben werden. Ferner kann das Fahrzeugsignal eine Steuerungsanweisung umfassen. Die Systemsteuerung 140 analysiert die Steuerungsanweisung zur Bestimmung derjenigen Energiespeicher 110, die zur Umsetzung der Steuerungsanweisung relevant sind, und gibt ein Steuersignal an die Energiespeichersteuerungen 130 der betreffenden Energiespeicher 110 aus.

Das TES-System 100 kann durch den modularen Aufbau auf der Ebene der Energiespeicher 110 skalierbar eingesetzt werden. Die Energiespeicher 110 sind mehrfach parallel oder seriell verschaltbar. Durch Verschaltung und Anzahl der verschalteten Energiespeicher 110 ist das TES-System 100 für eine Fahrzeug-spezifische Leistungs- und Energieanforderung ausgestaltbar. Diese Anforderungen können vom Grad der Elektrifizierung des Antriebsstrangs des Fahrzeugs abhängen. Ferner kann die Leistungsanforderung durch eine Transportleistung des Fahrzeugs, beispielsweise des Nutzfahrzeugs, und die Energieanforderung durch eine Reichweite des Fahrzeugs bestimmt sein. Durch das Zuschalten mittels der Schaltschütze 170 kann die Verschaltung und/oder die Anzahl der verschalteten Energiespeicher 110 im Betriebszustand veränderbar sein, beispielsweise steuerbar durch das Fahrzeugsignal.

Vorzugsweise stell die Systemsteuerung 140 hinsichtlich einer physischen Schnittstelle und eines Kommunikationsprotokolls eine einheitliche Datenschnittstelle zum Fahrzeug bereit, die unabhängig von der Fahrzeug-spezifischen Ausgestaltung des TES-Systems 100 sein kann. Die mehreren Energiespeicher 110 können sich aufgrund der Kommunikation über die Systemsteuerung 140 gegenüber dem Fahrzeug wie ein entsprechend großer Energiespeicher verhalten. Dadurch wird ein Fahrzeug-spezifischer Integrationsaufwand minimiert.

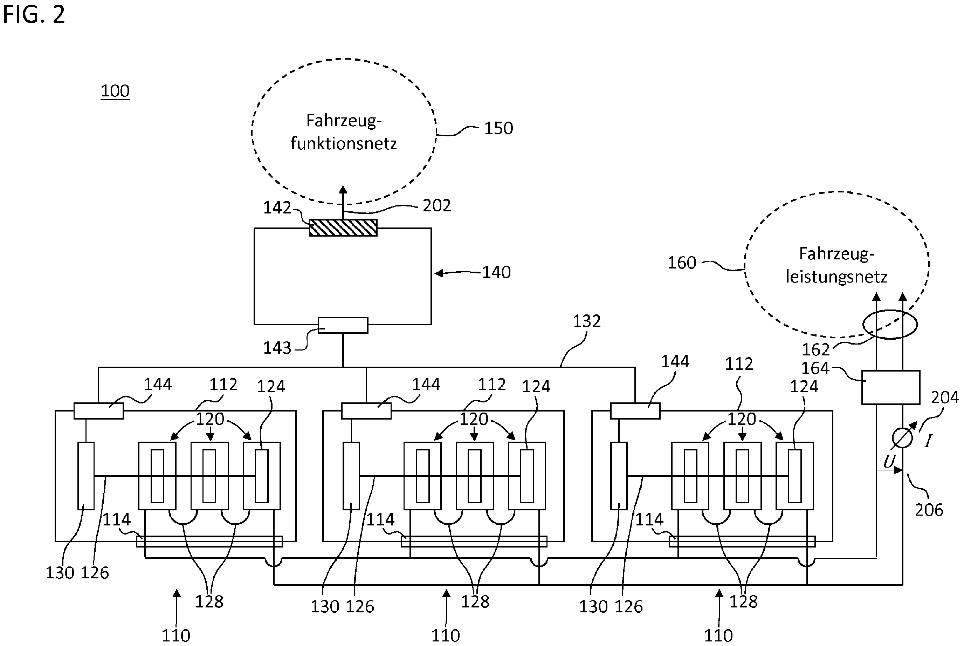

Figur 2 zeigt ein schematisches Blockschaltbild eines zweiten Ausführungsbeispiels eines TES-Systems 100, dessen Merkmale mit dem ersten Ausführungsbeispiel der Figur 1 kombinierbar sind. Mit den anderen Ausführungsbeispielen übereinstimmende Bezugszeichen bezeichnen entsprechende oder identische Merkmale.

Die Systemsteuerung 140 ist außerhalb der Gehäuse 112 der Energiespeicher 110 angeordnet. Die Systemsteuerung 140 umfasst eine erste Datenschnittstelle 142 für die fahrzeugseitige Kommunikation. Beispielsweise ist die erste Datenschnittstelle 142 mit dem Funktionsnetz 150 und/oder einer Motorsteuerung verbunden. Ferner umfasst die Systemsteuerung 140 eine zweite Datenschnittstelle 143, die über den externen Datenbus 132 mit Datenschnittstellen 144 der Energiespeicher 110 verbunden ist. Die Systemsteuerung 140 erhält die Signale der einzelnen Energiespeicher 110 über die zweite Datenschnittstelle 143. Das Systemsignal wird über die erste Datenschnittstelle 142 ausgegeben.

Die Hochvoltschnittstellen 114 der einzelnen Energiespeicher 110 sind parallel verschaltet und an das Leistungsnetz 160 und/oder den Inverter angeschlossen. In jedem Ausführungsbeispiel kann eine Systemhochvoltschnittstelle 162 zum Energieaustausch zwischen dem TES-System 100 und dem Leistungsnetz 160 des Fahrzeugs vorgesehen sein.

Der Strom /durch die Systemhochvoltschnittstelle 162 wird als Systemstrom 204 bezeichnet. Die einheitliche Spannung U der Parallelschaltung liegt an der Systemhochvoltschnittstelle 162 an und wird als Systemspannung 206 bezeichnet. Aufgrund der Parallelschaltung kann der Systemstrom 204 auch als Gesamtstrom des TES-Systems 100 bezeichnet werden.

Ein von der Systemsteuerung 140 gesteuertes Systemschaltschütz 164, das optional zusätzlich vorgesehen sein kann, ermöglicht, die Systemhochvoltschnittstelle 162 spannungsfrei zu schalten. Alternativ kann das Systemschaltschütz 164 in einer Hochvoltverteilungseinheit des Leistungsnetzes 160 angeordnet sein. In diesem Fall kann das Systemschaltschütz 164 direkt (beispielsweise über den externen Datenbus 132) oder mittelbar (beispielsweise über eine Komponente des Funktionsnetzes 150) von der Systemsteuerung 140 gesteuert werden. Das TES-System 100 kann auch ohne Systemschaltschütz 164 ausgeführt sein.

Die erste Datenschnittstelle 142 ist an einen seriellen Bus 202 des Fahrzeugfunktionsnetzes 150, beispielsweise einen vom TES-System 100 unabhängigen CAN-Bus, angeschlossen.

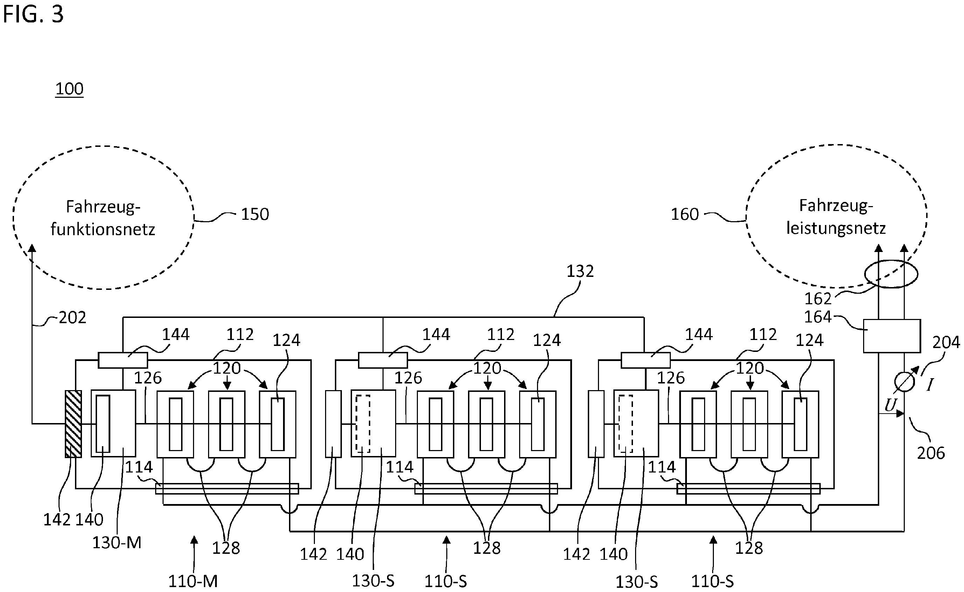

Figur 3 zeigt ein schematisches Blockschaltbild eines dritten Ausführungsbeispiels eines TES-Systems 100 für ein Fahrzeug. Das dritte Ausführungsbeispiel unterscheidet sich vom zweiten Ausführungsbeispiel dadurch, dass die Funktion der Systemsteuerung 140 in einem Energiespeicher 110-M der Energiespeicher 110 ausgeführt wird. Hierzu umfasst der Energiespeicher 110-M die erste Datenschnittstelle 142. Über eine zweite Datenschnittstelle 144 erhält der Energiespeicher 110-M die Signale der anderen Energiespeicher 110-S, die nicht die Funktion der Systemsteuerung 140 ausführen. Die erste Datenschnittstelle 142 und die zweite Datenschnittstelle 144 sind jeweils im Energiespeicher 110-M mit der Energiespeichersteuerung 130-M verbunden, die die Funktion der Systemsteuerung 140 ausführt.

Alle Energiespeicher 110-M und 110-S (oder zumindest deren Energiespeichersteuerungen 130-M bzw. 130-S) sind vorzugsweise baugleich. Auch die Energiespeicher 110-S können eine erste Datenschnittstelle 142 umfassen, die außerhalb des Energiespeichers 110-S unverbunden ist. Die zweiten Datenschnittstellen 144 aller Energiespeicher 110-M und 110-S sind über den externen Datenbus 132 verbunden.

In einer bevorzugten Ausgestaltung ist die Funktion der Systemsteuerung 140 auch in jeder Energiespeichersteuerung 130-S der Energiespeicher 110-S implementiert und nicht zur Ausführung aktiviert (gezeigt als gestrichelter Funktionsblock in Figur 3). Durch Setzen eines oder mehrerer Parameter der Energiespeichersteuerung 130 kann die Funktion der Systemsteuerung 140 wahlweise zur Ausführung aktiviert und deaktiviert werden.

Die in den Figuren 2 und 3 gezeigte Parallelschaltung der drei Hochvoltschnittstellen 114 ist beispielhaft. Abhängig von den Anforderungen des Fahrzeugleistungsnetzes 160 (z. B. hinsichtlich Strom, Spannung, Leistung und/oder Energie) kann eine größere Anzahl an Energiespeichern 110 und/oder eine andere Verschaltung der Hochvoltschnittstellen 114 eingesetzt werden. Insbesondere können die Hochvoltschnittstellen 114 innerhalb jeweils einer Gruppe von Energiespeichern 110 in Reihe geschaltet sein, und die Gruppen untereinander parallel geschaltet sein.

Für das Zusammenschalten einer Teilmenge der Energiespeichern 110 können deren (beispielsweise an den jeweiligen Hochvoltschnittstellen 114 implementierten) Schaltschütze 170 (und das Systemschaltschütz 164) geschlossen werden. Die Spannungen an den Hochvoltschnittstellen 114 der zusammengeschalteten Energiespeichern 110 sind aufgrund der Parallelschaltung der Energiespeicher 110 einheitlich. Im Betriebszustand fließen Lade- beziehungsweise Entladeströme durch die Systemhochvoltschnittstelle 162. Der durch die Systemhochvoltschnittstelle 162 fließende Strom verteilt sich (zumindest im Allgemeinen) nicht zu gleichen Teilen auf die Hochvoltschnittstellen 114 der einzelnen Energiespeicher 110, beispielsweise da sich die Energiespeicher 110 in ihren Speicherzuständen unterscheiden. Der Speicherzustand jedes Energiespeichers 110 kann elektrochemische Zustandsgrößen (beispielsweise Ladezustand, Alterungszustand oder Speicherkapazität) und/oder elektrotechnische Größen (beispielsweise Strom, Leerlaufspannung, Innenwiderstand) umfassen.

Die Speicherkapazität jedes Energiespeichers 110 kann seine Speicherfähigkeit als die im vollständig geladenen Zustand entnehmbare Ladung (z. B. das Zeitintegral des Entladestroms von Anfangsspannung bis Schlussspannung) beschreiben. Der Ladezustand (auch als "State of Charge" oder SoC bezeichnet) jedes Energiespeichers 110 ist der Anteil der noch entnehmbaren Ladung an der Speicherkapazität. Der funktionale Zusammenhang zwischen der (z. B. relaxierten) Leerlaufspannung (OCV) an der Hochvoltschnittstelle 114 und dem Ladezustand des Energiespeichers 110 ist die Entladekurve. Mittels einer in der Energiespeichersteuerung 130 gespeicherten Entladekurve kann aufgrund der gemessenen Leerlaufspannung der momentane Ladezustand bestimmt werden. Die Entladekurve kann tabellierten und/oder durch Integration des Stroms im Betriebszustand aktualisiert werden.

Die einzelnen Energiespeicher 110 im TES-System 100 können sich in ihren Ladezuständen unterscheiden. Deshalb können (beispielsweise in oder nach einem Betriebszustand des TES-Systems 100, wenn das Fahrzeug abgestellt wird und/oder eine Klemme der Fahrzeugzündung auf einem Referenzpotential liegt) die Energiespeicher 110 in unterschiedlichen Ladezuständen vorliegen.

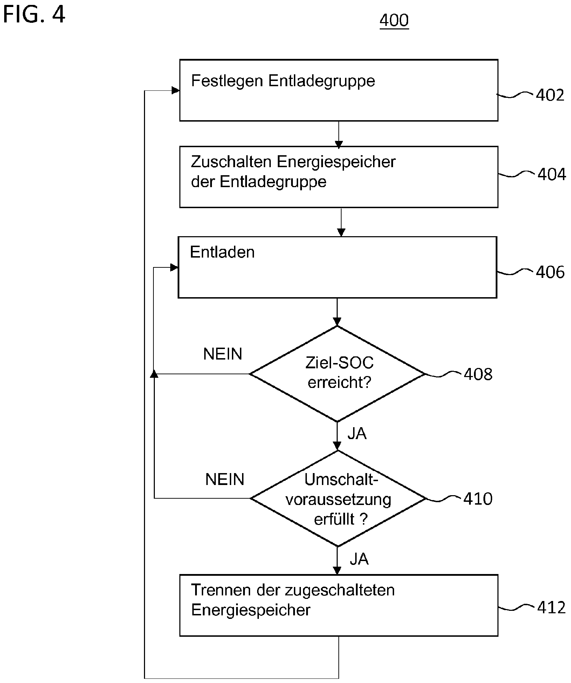

Die Figuren 4 bis 7 zeigen Ablaufdiagramme, die unterschiedliche Ausführungsbeispiele zum veränderlichen Verschalten, beispielsweise zum Zuschalten, von Energiespeichern in einem Traktionsenergiespeichersystems während des Entladens beschreiben. Die beschriebenen Steuerungen bzw. Verfahren können in jedem der in Figuren 1 bis 3 gezeigten Traktionsenergiespeichersysteme 100 implementiert werden.

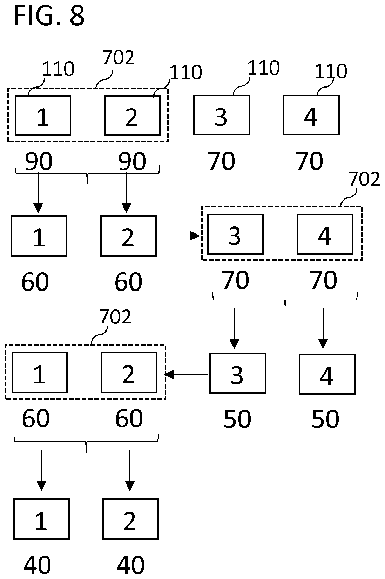

Figur 4 zeigt ein Ablaufdiagramm zur Illustration eines ersten Entlademodus gemäß einem Ausführungsbeispiel der Erfindung, wobei zum Bereitstellen elektrischer Energie aus dem parallelverschalteten TES-System 100 abwechselnd unterschiedliche Gruppen von Energiespeichern 110 zugeschaltet werden. Der erste Entlademodus ist ferner anhand eines Beispiels in Figur 8 illustriert, auf die nachfolgend ebenfalls Bezug genommen wird.

Vorstehend wurde bereits festgestellt, dass häufig Betriebssituationen auftreten, in denen die Leistungsanforderung an das Traktionsenergiespeichersystem dergestalt ist, dass die benötigte Leistung bereits durch eine Teilmenge der Energiespeicher des Traktionsenergiespeichersystems bereitgestellt werden kann. Gemäß dem ersten Entlademodus wird in derartigen Betriebssituationen eine geringere Anzahl an Energiespeichern des Traktionsenergiespeichersystems mit höherer Strombelastung betrieben, anstatt alle oder eine hohe Anzahl von Energiespeichern mit einer geringeren Strombelastung zu entladen. Die dadurch über die Zeit erzielte Reduktion der zyklischen Belastungszeit jedes Einzelsystems kann zu einer Erhöhung der Gesamtlebensdauer des Traktionsenergiespeichersystems führen.

Gemäß dem ersten Entlademodus 400 erfolgt hierbei insbesondere ein wiederholtes Umschalten auf unterschiedliche Energiespeicher, die jeweils entladen werden. In Figur 8 ist dies anhand eines stark vereinfachten Beispiels mit einem TES-System 100, bestehend aus lediglich vier Energiespeichern 110, nachfolgend zur Unterscheidung mit "1", "2", "3" und "4" bezeichnet, illustriert. Zu einem gewissen Betriebszeitpunkt weisen die beiden Energiespeicher "1" und "2" einen Ladezustand von jeweils 90 % auf, die verbleibenden anderen Energiespeicher jeweils 70 %. Gemäß dem ersten Entlademodus werden zur Bereitstellung elektrischer Energie zuerst die beiden Energiespeicher "1" und "2" mit höchstem Ladezustand der Entladegruppe 702 zugeordnet und durch Schließen der entsprechenden Schaltschütze zugeschaltet. Dann werden diese beiden Energiespeicher so lange entladen, bis ihr Ladezustand um einen vorbestimmten Differenzbetrag, hier lediglich beispielhaft 10 %, kleiner ist als der Ladezustand desjenigen Energiespeichers, der von den nicht zugeschalteten Energiespeichern den höchsten Ladezustand aufweist, hier die Energiespeicher mit 70 % Ladezustand. Nachdem die ersten beiden Energiespeicher auf 60 % entladen sind, werden diese wieder durch Öffnen der Schaltschütze vom Leistungsnetz getrennt. Anschließend werden die Energiespeicher "3" und "4" mit 70 % Ladezustand als Energiespeicher der Entladegruppe 702 identifiziert und zugeschaltet und auf 50 % entladen. Die Zusammensetzung der Entladegruppe 702 hat sich somit geändert. Dann werden diese Energiespeicher wieder getrennt und anschließend wieder die ersten beiden Energiespeicher "1" und "2" mit 60 % Ladezustand als Ladegruppe 702 zugeschaltet und auf 40 % entladen usw.

Dieses Entladeprinzip ist nochmals in Figur 4 erläutert. Die Funktion des ersten Entlademodus 400 ist vorzugsweise in der Systemsteuerung 140 implementiert. Erhält die Systemsteuerung 140 eine Leistungsanforderung zum Bereitstellen elektrischer Energie (Entladebetrieb), kann der erste Entlademodus aktiviert werden.

Gemäß dem Entlademodus werden wiederholt die Schritte 402 bis 412 der Figur 4 durchlaufen. In Schritt 402 werden zuerst diejenigen Energiespeicher des TES-Systems 100 ermittelt, die zuerst zugeschaltet werden. Diese Auswahl bzw. dieser Cluster von Energiespeichern wird als (erste) Entladegruppe bezeichnet. Bei jedem Durchlauf der Schritte 402 bis 412 ändert sich die Zusammensetzung der Entladegruppe. Die Systemsteuerung 140 bestimmt und überwacht fortlaufend die Ladezustände der mehreren Energiespeicher 110. In Abhängigkeit von den bestimmten Ladezuständen der mehreren Energiespeicher 110 wird die Startzusammensetzung der Entladegruppe festlegt, und zwar derart, dass die erste Entladegruppe denjenigen Energiespeicher umfasst, der den höchsten Wert der bestimmten Ladezustände aufweist. Je nach Ausführungsvariante kann die erste Entladegruppe mehrere Energiespeicher umfassen, z. B. alle Energiespeicher, die aktuell den höchsten Ladezustand aufweisen, wie dies z. B. in Figur 8 gezeigt ist. Die Anzahl der Energiespeicher in der ersten Entladegruppe kann jedoch auch begrenzt sein auf eine Maximalanzahl. Anschließend erfolgt ein Zuschalten 404 lediglich der der ersten Entladegruppe zugeordneten Energiespeicher durch Schließen der entsprechenden Schaltschütze 170 dieser Energiespeicher mittels der jeweiligen Energiespeichersteuerungen 130. Dadurch werden diese Energiespeicher der ersten Entladegruppe in Schritt 406 entladen. Dabei wird fortlaufend überwacht (Schritt 408), ob der Ladezustand der zugeschaltete Energiespeicher auf den Zielladezustand gefallen ist, der um einen definierten Wert kleiner ist als ein Ladezustand desjenigen Energiespeichers, der von den nicht zugeschalteten Energiespeichern den höchsten Ladezustand aufweist. Ist dies noch nicht der Fall, wird weiter entladen. Wenn der Zielladezustand erreicht ist, kann optional noch geprüft werden, ob eine vorbestimmte Umschaltvoraussetzung erfüllt ist. Beispielsweise kann eine Umschaltvoraussetzung erfüllt sein, falls das Fahrzeug zum Stillstand gekommen ist, z. B. während Fahrpausen und/oder falls ein Wert einer Größe, die ein Maß für die aktuelle Leistungsanforderung oder Fahrbelastung ist, einen vorbestimmten Belastungsschwellenwert unterschreitet, so dass eine Umschaltung nur bei geringer Belastung während der Fahrt erfolgt. Der Entladevorgang mit der bisherigen Entladegruppe wird hierbei erst beendet, wenn die Umschaltvoraussetzung 410 erfüllt ist. Dann erfolgt in Schritt 412 ein Trennen der bisher zugeschalteten Energiespeicher durch Öffnen der jeweiligen Schaltschütze 170 mittels der jeweiligen Energiespeichersteuerungen 130. Anschließend wird gemäß Schritt 402 wieder eine neue Entladegruppe festgelegt, basierend auf den Energiespeichern, die dann den höchsten Ladezustand aufweisen usw.

Ein Entladevorgang gemäß dem ersten Entlademodus 400 bietet somit den besonderen Vorzug, dass die benötigte elektrische Leistung durch eine Teilmenge der parallel verschalteten Energiespeicher dargestellt wird, die entsprechend mit höherer Stromstärke betrieben werden müssen als ein Betrieb, bei dem alle Energiespeicher mit entsprechend kleinerer Stromstärke entladen werden. Wie vorstehend bereits erwähnt, ist dies zur Verbesserung der Lebensdauer bzw. der zyklischen Alterung der Energiespeicher von Vorteil. Durch Reduktion der zyklischen Belastungszeit jedes Einzelsystems führt dies zu einer Erhöhung der Gesamtlebensdauer des Traktionsenergiespeichers.

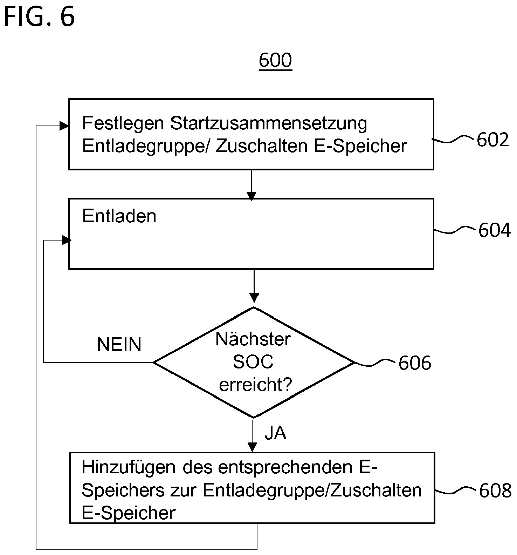

Figur 6 zeigt ein Ablaufdiagramm zur Illustration eines zweiten Entlademodus gemäß eines Ausführungsbeispiels. Die Funktion des zweiten Entlademodus 600 ist vorzugsweise ebenfalls in der Systemsteuerung 140 implementiert. Erhält die Systemsteuerung 140 eine Leistungsanforderung zum Bereitstellen elektrischer Energie (Entladebetrieb), kann wahlweise der erste oder der zweite Entlademodus aktiviert werden.

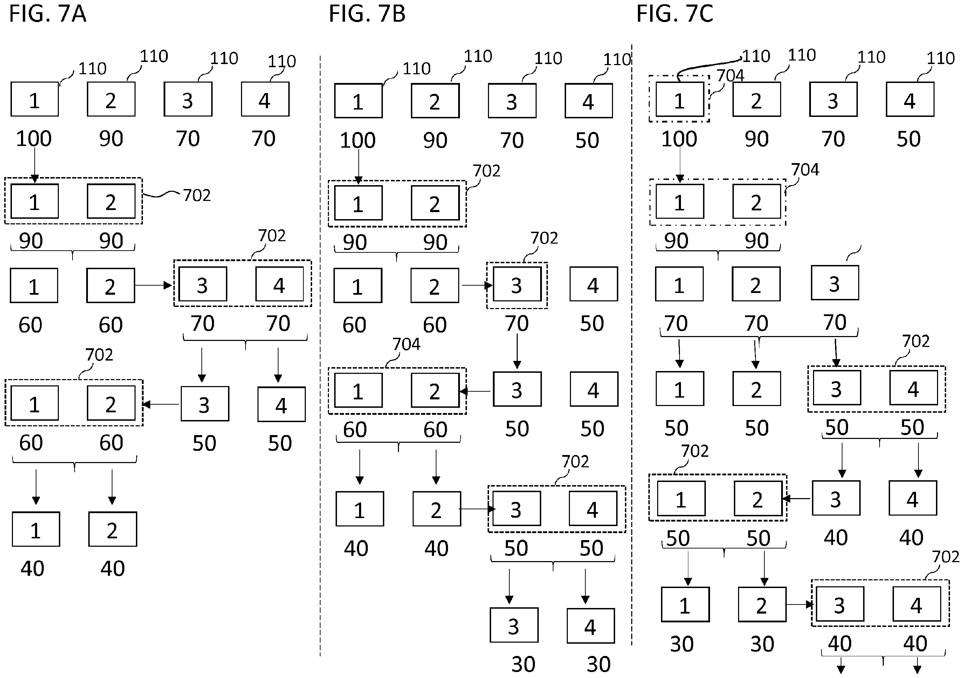

Mithilfe des zweiten Entlademodus 600 können beispielsweise die Ladezustände von Energiespeichern gezielt angeglichen werden, um Gruppen von Energiespeichern zu bilden, die sich dann, zusammengefasst als eine erste Entladegruppe, für die Durchführung des ersten Entlademodus eignen, was nachfolgend noch bei der Beschreibung der Figuren 7A bis 7C illustriert wird.

Bei dem zweiten Entlademodus 600 werden nicht wie beim ersten Entlademodus wechselnde Gruppen von Energiespeichern abwechselnd entladen. Vielmehr werden ausgehend von dem Energiespeicher oder den Energiespeichern mit höchstem Ladezustand, der bzw. die zuerst entladen wird bzw. werden, nacheinander weitere Energiespeicher nach Maßgabe ihres Ladungszustands bzw. ihrer Leerlaufspannung zum Entladen "aufgesammelt", d. h. zusätzlich und nicht abwechselnd zugeschaltet.

Beispielsweise kann die Systemsteuerung 140 dazu ausgebildet sein, gemäß dem zweiten Entlademodus die folgenden Schritte auszuführen:
Es werden wiederum fortlaufend die Ladezustände der Energiespeicher 110 bestimmt und überwacht. In Schritt 702 erfolgt eine Festlegung einer Startzusammensetzung der Entladegruppe für den zweiten Entlademodus durch Hinzufügen mindestens eines der mehreren Energiespeicher zu der Entladegruppe (zweite Entladegruppe) in Abhängigkeit von den bestimmten Ladezuständen der mehreren Energiespeicher. Die Entladegruppe kann wiederum den oder die Energiespeicher mit höchstem Ladezustand enthalten. Die Anzahl der Energiespeicher in der zweiten Entladegruppe kann jedoch auch begrenzt sein auf eine Maximalanzahl. Die Energiespeicher der zweiten Entladegruppe werden dann durch Schließen der entsprechenden Schaltschütze 170 mittels der jeweiligen Energiespeichersteuerungen 130 zugeschaltet und dadurch entladen 704.

Anschließend erfolgt ein Hinzufügen bzw. Zuschalten weiterer bisher nicht zugeschalteter Energiespeicher 110 zu der zweiten Entladegruppe, die durch Schließen der entsprechenden Schaltschütze jeweils dann, wenn deren Ladezustand mit einem durch die Ladezustände der bereits zugeschalteten Energiespeicher der zweiten Entladegruppe definierten Bereich übereinstimmt.

So wird als nächstes der oder diejenigen Energiespeicher 110 zusätzlich zugeschaltet, der oder die von den bisher nicht zugeschalteten Energiespeichern 110 den höchsten Ladezustand aufweist oder aufweisen. Der Zeitpunkt der Zuschaltung 608 erfolgt dann, wenn die Ladezustände der bereits zugeschalteten Energiespeicher 110 auf diesen Ladezustand gefallen sind. Diese Zuschaltbedingung wird in Schritt 606 fortlaufend durch Bestimmung und Überwachung der Ladezustände geprüft. Auf diese Weise können hohe Ausgleichströme beim Zuschalten vermieden werden und Ladezustände unterschiedlicher Energiespeicher gezielt angeglichen werden.

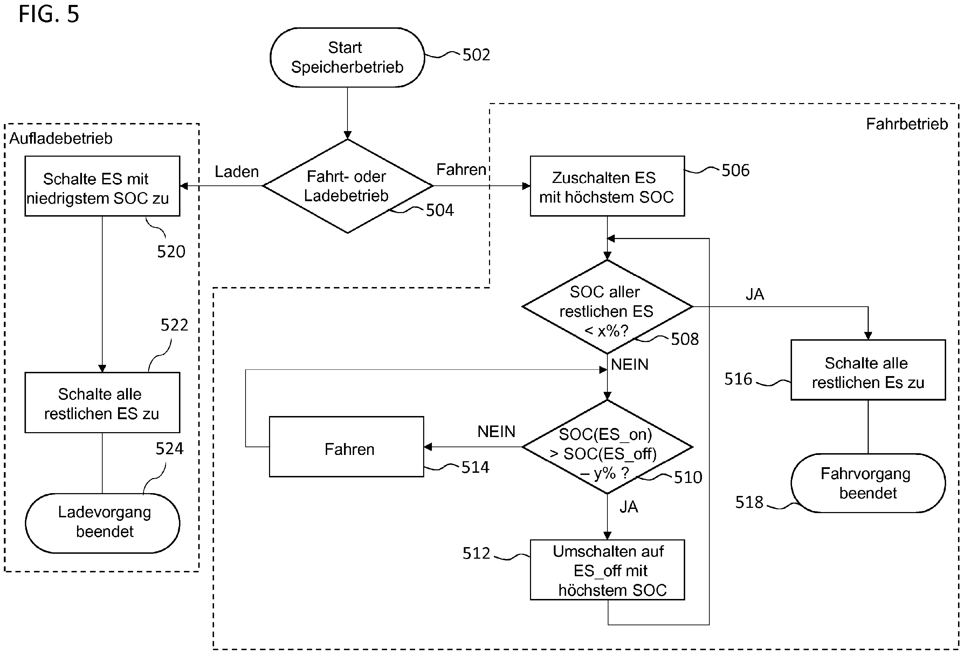

Figur 5 zeigt ein Ablaufdiagramm zur Illustration eines weiteren Ausführungsbeispiels.

Wenn die Systemsteuerung 140, beispielsweise vom Fahrzeugfunktionsnetz 150, ein Signal zum Start des Speicherbetriebs übermittelt bekommt (Schritt 502), prüft die Systemsteuerung 140 (Schritt 504), ob ein Fahrt- oder Ladebetrieb ansteht. Bei einem Fahrbetrieb 506 wird der Energiespeicher entladen. Die Systemsteuerung 140 kann wahlweise einen Entladevorgang gemäß dem ersten Entlademodus oder gemäß dem zweiten Entlademodus durchführen. In Figur 5 beginnt die Systemsteuerung lediglich beispielhaft mit dem ersten Entlademodus. Hierzu ermittelt die Systemsteuerung 140 den/die Energiespeicher mit dem höchsten Ladezustand und schaltet diesen/diese gemäß dem ersten Entlademodus als erste Entladegruppe zu (Schritt 506).

Während des Entladens mit diesen zugeschalteten Energiespeichern prüft die Systemsteuerung 140, ob die aktuellen Ladezustände aller Energiespeicher jeweils kleiner als ein vorbestimmter Ladezustandsschwellenwert (x %) sind (Schritt 508).

Ist dies der Fall, wird zur Maximierung der Reichweite zum zweiten Entlademodus gewechselt, und es werden dabei in Schritt 516 alle restlichen, d. h. noch nicht zugeschalteten, Energiespeicher nach Maßgabe ihre Ladezustände zugeschaltet, wie z. B. vorstehend in Zusammenhang mit Figur 6 beschrieben wurde. Hierbei wird somit ein bisher nicht zugeschalteter Energiespeicher 110 zu dem Zeitpunkt zugeschaltet, wenn die Ladezustände der bereits zugeschalteten Energiespeicher dessen Ladezustandsniveau erreichen. Nachdem alle Energiespeicher zugeschaltet sind, bleiben diese zugeschaltet, bis der Fahrvorgang beendet ist (518).

Ergibt die Prüfung in Schritt 508, dass Energiespeicher 110 existieren, deren Ladezustand größer als ein vorbestimmter Ladezustandsschwellenwert (x %) ist, wird in Schritt 510 geprüft, ob der Ladezustand der bereits zugeschalteten Energiespeicher (ES_on) um einen vordefinierten Wert (y %) unterhalb des Ladezustands gefallen ist, den derjenige Energiespeicher (ES_off) aufweist, der von den nicht zugeschalteten Energiespeichern momentan den höchsten Ladezustand aufweist.

Solange der Ladezustand der bereits zugeschalteten Energiespeicher noch nicht auf diesen Wert gefallen ist, erfolgt der Fahrbetrieb (Schritt 514) mithilfe der zugeschalteten Energiespeicher der aktuellen Entladegruppe. Erst nachdem der höchste Ladezustand der nicht zugeschalteten Energiespeicher um den Wert y % unterschritten ist, erfolgt ein Trennen des/der bisher zugeschalteten Energiespeicher(s) und ein Umschalten auf denjenigen/diejenigen Energiespeicher, der/die dann aktuell den höchsten Ladezustand aufweist/aufweisen.

Der Entladevorgang wird anschließend mit Schritt 508 fortgesetzt.

Ergibt die Prüfung in Schritt 504, dass ein Ladevorgang des TES-Systems 100 ansteht, erfolgt ein Aufladebetrieb. Ähnlich wie bei dem zweiten Entlademodus erfolgt der Aufladebetrieb durch ein sukzessives Zuschalten der Energiespeicher, angefangen mit dem/den Energiespeicher/n mit niedrigstem Ladezustand (Schritt 520). Anschließend erfolgt ein sukzessives Zuschalten weiterer Energiespeicher in Schritt 522 nach Maßgabe ihrer Ladezustände. Die restlichen Energiespeicher werden zu dem Zeitpunkt zugeschaltet, wenn der Ladezustand der bereits zugeschalteten Energiespeicher durch Aufladen ein Niveau erreicht, das dem Ladezustand des nicht zugeschalteten Energiespeichers entspricht. Dadurch werden Ausgleichströme beim Zuschalten möglichst vermieden. Nachdem alle Energiespeicher zugeschaltet sind und das TES-System 100 vollständig geladen ist, wird der Ladevorgang beendet (524).

Die Figuren 7A bis 7C zeigen eine schematische Illustration weiterer Ausführungsbeispiele zur Kombination des ersten Entlademodus und des zweiten Entlademodus. Die Figuren 7A bis 7C zeigen zur besseren Verdeutlichung des erfindungsgemäßen Entladeprinzips wiederum lediglich beispielhaft stark vereinfachte Beispiele mit einem TES-System 100, bestehend aus lediglich vier Energiespeichern 110 ("1" bis "4"). Der Ladezustand jedes Energiespeichers ist jeweils durch die Zahl unterhalb des Energiespeichers angegeben.

Gemäß dem Beispiel der Figur 7A sind beispielsweise zu Beginn eines Entladevorgangs die Ladezustände der vier Energiespeicher 110 wie folgt verteilt: Der Ladezustand des Energiespeichers "1" beträgt 100 %, der des Energiespeichers "2" 90 %, der des Energiespeichers "3" 70 % und der des Energiespeichers "4" ebenfalls 70 %.

Je nach angeforderter Entladeleistung kann die Anzahl der Energiespeicher zur Bildung einer Entladegruppe gemäß dem zweiten Entlademodus auf eine vorbestimmte Anzahl N festgelegt sein. Lediglich beispielhaft ist hier N = 2.

Da zu Beginn des Entladevorgangs nur ein Speicher den höchsten Ladezustand aufweist, hier der Speicher "1" mit Ladezustand 100 %, werden zuerst mittels des zweiten Entlademodus die Ladezustände der beiden ersten Energiespeicher "1" und "2" angeglichen. Es wird also zuerst nur der Energiespeicher "1" durch Schließen seines Schaltschützes zugeschaltet und auf den Ladezustandswert von 90 % entladen. Anschließend erfolgt ein Wechsel in den ersten Entlademodus, bei dem die beiden Energiespeicher "1", "2" mit nunmehr höchstem Ladezustand von 90 % zur ersten Entladegruppe 702 zugeordnet und entladen werden. Die beiden Energiespeicher der Entladegruppe 702 werden auf einen Ladezustand entladen, der um einen vordefinierten Differenzbetrag (y %) unterhalb des höchsten Ladezustands liegt, den die nicht zugeschalteten Energiespeicher "3" und "4" aufweisen. Der Differenzbetrag ist hier lediglich beispielhaft auf 10 % eingestellt, so dass die beiden ersten Energiespeicher "1" und "2" auf einen Ladezustand von 60 % entladen werden. Anschließend werden die beiden Energiespeicher "1", "2" wieder durch Öffnen der Schaltschütze getrennt. Anstelle der beiden Energiespeicher "1" und "2" werden nun die Energiespeicher "3" und "4" als neue Entladegruppe 702 festgelegt und durch Schließen der jeweiligen Schaltschützen zugeschaltet. Anschließend werden somit die beiden Energiespeicher "3" und "4" von 70 % auf 50 % Ladezustand entladen und anschließend wieder durch Öffnen der Schaltschütze getrennt. Stattdessen werden wiederum die beiden Energiespeicher "1" und "2" als neue Entladegruppe 702 festgelegt, zugeschaltet und damit entladen bis auf einen Ladezustandswert von 40 %.

Figur 7B illustriert ein weiteres Ausführungsbeispiel, gemäß dem zu Beginn eines Entladevorgangs die Ladezustände der vier Energiespeicher 110 wie folgt verteilt sind: Der Ladezustand des Energiespeichers "1" beträgt 100 %, der des Energiespeichers "2" 90 %, der des Energiespeichers "3" 70 % und der des Energiespeichers "4" 50 %.

Da zu Beginn des Entladevorgangs nur ein Speicher den höchsten Ladezustand aufweist, hier der Speicher "1" mit Ladezustand 100 %, werden zuerst mittels des zweiten Entlademodus die Ladezustände der beiden ersten Energiespeicher "1" und "2" angeglichen. Es wird also zuerst nur der Energiespeicher "1" durch Schließen seines Schaltschützes zugeschaltet und auf den Ladezustandswert von 90 % entladen. Anschließend erfolgt ein Wechsel in den ersten Entlademodus, bei dem die beiden Energiespeicher "1", "2" mit nunmehr höchstem Ladezustand von 90 % zur ersten Entladegruppe 702 zugeordnet und entladen werden. Die beiden Energiespeicher der Entladegruppe 702 werden auf einen Ladezustand entladen, der um einen vordefinierten Differenzbetrag (y %) unterhalb des höchsten Ladezustands liegt, den die nicht zugeschalteten Energiespeicher "3" und "4" aufweisen. Der Differenzbetrag ist hier lediglich beispielhaft auf 10 % eingestellt, so dass die beiden ersten Energiespeicher auf einen Ladezustand von 60 % entladen werden. Anschließend werden die beiden Energiespeicher "1", "2" wieder durch Öffnen der Schaltschütze getrennt. Anstelle der beiden Energiespeicher "1" und "2" wird nun der Energiespeicher "3", der dann den höchsten Ladezustand von 70 % aufweist, als neue Entladegruppe 702 festgelegt und durch Schließen seines Schaltschützes zugeschaltet. Anschließend wird der Energiespeicher "3" von 70 % auf 50 % Ladezustand entladen und anschließend wieder durch Öffnen der Schaltschütze getrennt. Stattdessen werden wiederum die beiden Energiespeicher "1" und "2" als neue Entladegruppe 702 festgelegt, zugeschaltet und bis auf einen Ladezustandswert von 40 % entladen und anschließend wieder durch Öffnen der Schaltschütze getrennt. Anschließend werden wieder diejenigen Energiespeicher, die nun den höchsten Ladezustand aufweisen, d. h. die Energiespeicher "3" und "4", als neue Entladegruppe 702 festgelegt, zugeschaltet und bis auf einen Ladezustandswert von 30 % entladen.

Figur 7C illustriert ein weiteres Ausführungsbeispiel, gemäß dem zu Beginn eines Entladevorgangs die Ladezustände der vier Energiespeicher 110 wie im Beispiel der Figur 7B verteilt sind.

Es wird zuerst der zweite Entlademodus durchgeführt. Entsprechend wird zuerst der Energiespeicher "1" mit höchstem Ladezustand zugeschaltet. Die Entladegruppe 704 besteht folglich nur aus einem Energiespeicher. Nachdem der Ladezustand des Energiespeichers "1" auf den Wert 90 % des (nicht zugeschalteten) Energiespeichers mit nächsthöherem Ladezustand gefallen ist, wird dieser (Energiespeicher "2") zugeschaltet. Die Entladegruppe 704 besteht nun aus zwei Energiespeichern. Nachdem die Ladezustände der Energiespeicher "1" und "2" auf 70 % gefallen sind, was dem Ladezustand des Energiespeichers "3" entspricht, erfolgt ein Wechsel zum ersten Entlademodus. Hierbei werden zwei der Energiespeicher mit höchstem Ladezustand als Entladegruppe 702 ausgewählt, hier Energiespeicher "3" und "4", zugeschaltet und auf einen Ladezustand entladen, der um den vordefinierten Differenzbetrag (10 %) unterhalb des höchsten Ladezustands der nicht zugeschalteten Energiespeicher liegt. Anschließend werden die beiden Energiespeicher "3", "4" wieder durch Öffnen der Schaltschütze getrennt. Anstelle der beiden Energiespeicher "3" und "4" werden nun die Energiespeicher "1" und "2", die dann den höchsten Ladezustand von 50 % aufweisen, als neue Entladegruppe 702 festgelegt und durch Schließen der Schaltschütze zugeschaltet. Anschließend werden die Energiespeicher "1" und "2" von 50 % auf 30 % Ladezustand entladen und anschließend wieder durch Öffnen der Schaltschütze getrennt. Stattdessen werden wiederum die beiden Energiespeicher "3" und "4" als neue Entladegruppe 702 festgelegt, zugeschaltet und bis auf einen Ladezustandswert von 30 % entladen und anschließend wieder durch Öffnen der Schaltschütze getrennt.

Obwohl die Erfindung in Bezug auf exemplarische Ausführungsbeispiel beschrieben worden ist, ist es für einen Fachmann ersichtlich, dass verschiedene Änderungen vorgenommen werden können.

Ferner können viele Modifikationen vorgenommen werden, um eine bestimmte Situation oder ein bestimmtes Material an die Lehre der Erfindung anzupassen. Insbesondere beansprucht die Erfindung Schutz für den Gegenstand und die Merkmale der Unteransprüche unabhängig von den in Bezug genommenen Ansprüchen.

### Bezugszeichenliste

- 100: Traktionsenergiespeichersystem
- 110: Energiespeicher
- 112: Gehäuse des Energiespeichers
- 114: Hochvoltschnittstelle
- 120: Zellmodul
- 122: Speicherzellen
- 124: Zellmodulsteuerung
- 126: Interner Datenbus
- 127: Anschlussklemme
- 128: Stromschiene
- 130: Energiespeichersteuerung
- 132: Externer Datenbus
- 134: Funktionsumfang der Energiespeichersteuerung im Einzelbetrieb
- 140: Systemsteuerung
- 142: Erste Datenschnittstelle
- 144: Zweite Datenschnittstelle
- 150: Funktionsnetz des Fahrzeugs
- 160: Leistungsnetz des Fahrzeugs
- 162: Systemhochvoltschnittstelle
- 164: Systemschaltschütz
- 170: Schaltschütz
- 172: Steuerverbindung zwischen Energiespeichersteuerung und Schaltschütz
- 202: CAN-Bus des Funktionsnetzes
- 204: Systemstrom
- 206: Systemspannung
- 400: Erster Entlademodus
- 402-412: Schritte im ersten Entlademodus
- 502-518: Schritte eines Ausführungsbeispiels
- 502-508: Schritte im zweiten Entlademodus
- 600: Zweiter Entlademodus
- 602- 608: Schritte im zweiten Entlademodus
- 702: Erste Entladegruppe (Entladegruppe im ersten Entlademodus)
- 704: Zweite Entladegruppe (Entladegruppe im zweiten Entlademodus)

## Patentansprüche

1. Energiespeichersystem, insbesondere Traktionsenergiespeichersystem (100) für ein Fahrzeug, umfassend:
mehrere elektrische Energiespeicher (110), wobei jeder der Energiespeicher elektrisch verbundene Zellmodule (120), ein Schaltschütz (170), eine Energiespeicherhochvoltschnittstelle (114) und eine das Schaltschütz steuernde Energiespeichersteuerung (130) umfasst,
wobei jedes der Zellmodule mehrere Speicherzellen (122) und eine Zellmodulsteuerung (124) umfasst; und
wobei in jedem Energiespeicher (110) das Schaltschütz (170) dazu ausgebildet ist, die Zellmodule des Energiespeichers mit der Energiespeicherhochvoltschnittstelle (114) des jeweiligen Energiespeichers nach Vorgabe der Energiespeichersteuerung (130) in einer Schließstellung des Schaltschützes zu verbinden und in einer Offenstellung des Schaltschützes zu trennen;
wobei die Energiespeicherhochvoltschnittstellen der Energiespeicher im Energiespeichersystem parallel geschaltet sind; und
eine mit den Energiespeichersteuerungen (130) in Wirkverbindung stehende Systemsteuerung (140), die dazu ausgebildet ist, gemäß einem ersten Entlademodus (400) wiederholt die folgenden Schritte auszuführen:
Bestimmung der Ladezustände der mehreren Energiespeicher; Festlegen (402) einer ersten Entladegruppe (702) durch Zuordnen mindestens eines der mehreren Energiespeicher (110) zu der ersten Entladegruppe (702) in Abhängigkeit von den bestimmten Ladezuständen der mehreren Energiespeicher (110), derart, dass die erste Entladegruppe (702) denjenigen Energiespeicher umfasst, der den höchsten Wert der bestimmten Ladezustände aufweist, und dass der Ladezustand jedes des mindestens einen Energiespeichers der ersten Entladegruppe größer ist als oder gleich wie die Ladezustände der nicht der ersten Entladegruppe zugeordneten Energiespeicher;
Zuschalten (404) lediglich der der ersten Entladegruppe zugeordneten Energiespeicher durch Schließen der entsprechenden Schaltschütze (170) mittels der jeweiligen Energiespeichersteuerungen (130); und
Trennen (412) der zugeschalteten Energiespeicher durch Öffnen der jeweiligen Schaltschütze (170) mittels der jeweiligen Energiespeichersteuerungen (130), nachdem der Ladezustand der der ersten Entladegruppe zugeordneten Energiespeicher auf einen Wert gefallen ist, der um einen vorbestimmten Wert kleiner ist als ein Ladezustand desjenigen Energiespeichers, der von den nichtzugeschalteten Energiespeichern den höchsten Ladezustand aufweist,
wobei, nachdem der Ladezustand der zugeschalteten Energiespeicher der ersten Entladegruppe auf den Wert gefallen ist, der um einen vorbestimmten Wert kleiner ist als ein Ladezustand desjenigen Energiespeichers, der von den nicht zugeschalteten Energiespeichers den höchsten Ladezustand aufweist, ein Umschalten gemäß dem ersten Entlademodus auf eine neu festgelegte Entladegruppe mit zumindest diesem Energiespeicher durch das Trennen der zuletzt zugeschalteten Energiespeicher und das Zuschalten der neu festgelegten Entladegruppe erst bei Erfüllung (410) einer vorbestimmten Umschaltvoraussetzung erfolgt, wobei die vorbestimmte Umschaltvoraussetzung erfüllt ist, falls
a) das Fahrzeug zum Stillstand gekommen ist; oder
b) falls ein Wert einer Größe, die ein Maß für die aktuelle Leistungsanforderung oder Fahrbelastung ist, einen vorbestimmten Belastungsschwellenwert unterschreitet,
wobei die Systemsteuerung (140) ferner dazu ausgebildet ist, gemäß einem zweiten Entlademodus (600; 516) die folgenden Schritte auszuführen:
Bestimmung der Ladezustände der mehreren Energiespeicher;
Hinzufügen (602) mindestens eines der mehreren Energiespeicher zu einer zweiten Entladegruppe in Abhängigkeit von den bestimmten Ladezuständen der mehreren Energiespeicher, derart, dass die Entladegruppe denjenigen Energiespeicher umfasst, der den höchsten Wert der bestimmten Ladezustände aufweist, und dass der Ladezustand jedes des mindestens einen Energiespeichers der zweiten Entladegruppe größer ist als oder gleich wie die Ladezustände der nicht der zweiten Entladegruppe zugeordneten Energiespeicher;
Zuschalten (602) lediglich des mindestens einen der zweiten Entladegruppe zugeordneten, noch nicht zugeschalteten Energiespeichers durch Schließen der entsprechenden Schaltschütze (170) mittels der jeweiligen Energiespeichersteuerungen (130);
wobei anschließend weitere bisher nicht zugeschaltete Energiespeicher zu der zweiten Entladegruppe jeweils dann hinzugefügt und durch Schließen der entsprechenden Schaltschütze (170) zugeschaltet werden (608),
wobei als nächstes der Energiespeicher zusätzlich zugeschaltet wird, der die von den bisher nicht zugeschalteten Energiespeichern den höchsten Ladezustand aufweist, und wobei der Zeitpunkt der Zuschaltung dann erfolgt, wenn die Ladezustände der bereits zugeschalteten Energiespeicher auf diesen Ladezustand gefallen sind, und
wobei die Systemsteuerung (140) ferner dazu ausgebildet ist, wahlweise einen Entladevorgang gemäß dem ersten Entlademodus (400) oder gemäß dem zweiten Entlademodus (600; 516) durchzuführen.

2. Energiespeichersystem nach Anspruch 1, wobei das Festlegen der ersten Entladegruppe umfasst: Bestimmen der N Energiespeicher, die die N höchsten Werte der bestimmten Ladezustände aufweisen, wobei N eine vorbestimmte oder eine in Abhängigkeit von den bestimmten Ladezuständen und/oder in Abhängigkeit von einer Leistungsanforderung festgelegte natürliche Zahl ≥ 1 ist, und Festlegen der bestimmen N Energiespeicher als eine Entladegruppe.

3. Energiespeichersystem nach Anspruch 2, wobei die Zahl N in Abhängigkeit von einer Leistungsanforderung an das Energiespeichersystem festgelegt wird, insbesondere derart, dass N die kleinste Zahl an Energiespeichern festlegt, mit denen die aktuelle Leistungsanforderung als Entladeleistung bereitgestellt werden kann.

4. Energiespeichersystem nach einem der vorhergehenden Ansprüche, wobei die Systemsteuerung (140) dazu ausgebildet ist, von einem Entladevorgang gemäß dem ersten Entlademodus zu einem Entladevorgang gemäß dem zweiten Entlademodus zu wechseln, falls (508) der Ladezustand aller Energiespeicher jeweils kleiner als ein vorbestimmter Schwellenwert ist.

5. Energiespeichersystem nach einem der vorhergehenden Ansprüche, wobei die Systemsteuerung (140) dazu ausgebildet ist, einen Entladevorgang mit einem zweiten Entlademodus zu starten, bis eine Anzahl der Energiespeicher, die den höchsten Ladezustand aufweisen, eine vorbestimmte Mindestanzahl erreicht, und bei Erreichen der Mindestanzahl zum ersten Entlademodus zu wechseln.

6. Energiespeichersystem nach einem der vorhergehenden Ansprüche, wobei die Systemsteuerung (140) dazu ausgebildet ist, gemäß einem Lademodus zum Aufladen des Energiespeichersystems alle Energiespeicher durch Schließen der Schaltschütze, insbesondere nacheinander oder gleichzeitig, zuzuschalten.

7. Energiespeichersystem nach einem der vorhergehenden Ansprüche, wobei die Systemsteuerung (140) gemäß einem Lademodus zum Aufladen des Energiespeichersystems dazu ausgebildet ist, die folgenden Schritte auszuführen:
Bestimmung der Ladezustände der mehreren Energiespeicher;
Festlegen einer Ladegruppe durch Zuordnen mindestens eines der mehreren Energiespeicher zu der Ladegruppe in Abhängigkeit von den bestimmten Ladezuständen der mehreren Energiespeicher, derart, dass die Ladegruppe denjenigen Energiespeicher umfasst, der den kleinsten Wert der bestimmten Ladezustände aufweist, und dass der Ladezustand jedes des mindestens einen Energiespeichers der Ladegruppe kleiner ist als oder gleich wie die Ladezustände der nicht der Ladegruppe zugeordneten Energiespeicher;
Zuschalten (520) lediglich der der Ladegruppe zugeordneten, noch nicht zugeschalteten Energiespeicher durch Schließen der entsprechenden Schaltschütze (170) mittels der jeweiligen Energiespeichersteuerungen (130);
wobei anschließend weitere bisher nicht zugeschaltete Energiespeicher zu der Ladegruppe jeweils dann hinzugefügt und durch Schließen der entsprechenden Schaltschütze (170) zugeschaltet werden (522), wenn deren Ladezustand mit einem durch die Ladezustände der bereits zugeschalteten Energiespeicher der Ladegruppe definierten Bereich übereinstimmt.

8. Kraftfahrzeug, insbesondere Nutzfahrzeug, das ein Energiespeichersystem (100) nach einem der Ansprüche 1 bis 7 umfasst.

9. Verfahren zum Betrieb eines Energiespeichersystem, insbesondere eines Traktionsenergiespeichersystems (100) für ein Fahrzeug, wobei das Energiespeichersystem umfasst:
mehrere elektrische Energiespeicher (110), wobei jeder der Energiespeicher elektrisch verbundene Zellmodule (120), ein Schaltschütz (170), eine Energiespeicherhochvoltschnittstelle (114) und eine das Schaltschütz steuernde Energiespeichersteuerung (130) umfasst,
wobei jedes der Zellmodule mehrere Speicherzellen (122) und eine Zellmodulsteuerung (124) umfasst; und
wobei in jedem Energiespeicher (110) das Schaltschütz (170) dazu ausgebildet ist, die Zellmodule des Energiespeichers mit der Energiespeicherhochvoltschnittstelle (114) des jeweiligen Energiespeichers nach Vorgabe der Energiespeichersteuerung (130) in einer Schließstellung des Schaltschützes zu verbinden und in einer Offenstellung des Schaltschützes zu trennen;
wobei die Energiespeicherhochvoltschnittstellen der Energiespeicher im Energiespeichersystem parallel geschaltet sind;
wobei das Verfahren gemäß einem ersten Entlademodus (400) wiederholt die folgenden Schritte ausführt:
Bestimmung der Ladezustände der mehreren Energiespeicher;
Festlegen (402) einer ersten Entladegruppe (702) durch Zuordnen mindestens eines der mehreren Energiespeicher (110) zu der ersten Entladegruppe (702) in Abhängigkeit von den bestimmten Ladezuständen der mehreren Energiespeicher (110), derart, dass die erste Entladegruppe (702) denjenigen Energiespeicher umfasst, der den höchsten Wert der bestimmten Ladezustände aufweist, und dass der Ladezustand jedes des mindestens einen Energiespeichers der ersten Entladegruppe (702) größer ist als oder gleich wie die Ladezustände der nicht der ersten Entladegruppe zugeordneten Energiespeicher;
Zuschalten (404) lediglich der der ersten Entladegruppe zugeordneten Energiespeicher durch Schließen der entsprechenden Schaltschütze (170) mittels der jeweiligen Energiespeichersteuerungen (130); und
Trennen (412) der zugeschalteten Energiespeicher durch Öffnen der jeweiligen Schaltschütze (170) mittels der jeweiligen Energiespeichersteuerungen (130), nachdem der Ladezustand der der ersten Entladegruppe zugeordneten Energiespeicher auf einen Wert gefallen ist, der um einen vorbestimmten Wert kleiner ist als ein Ladezustand desjenigen Energiespeichers, der von den nicht zugeschalteten Energiespeichern den höchsten Ladezustand aufweist,
wobei, nachdem der Ladezustand der zugeschalteten Energiespeicher der ersten Entladegruppe auf den Wert gefallen ist, der um einen vorbestimmten Wert kleiner ist als ein Ladezustand desjenigen Energiespeichers, der von den nicht zugeschalteten Energiespeichers den höchsten Ladezustand aufweist, ein Umschalten gemäß dem ersten Entlademodus auf eine neu festgelegte Entladegruppe mit zumindest diesem Energiespeicher durch das Trennen der zuletzt zugeschalteten Energiespeicher und das Zuschalten der neu festgelegten Entladegruppe erst bei Erfüllung (410) einer vorbestimmten Umschaltvoraussetzung erfolgt, wobei die vorbestimmte Umschaltvoraussetzung erfüllt ist, falls
a) das Fahrzeug zum Stillstand gekommen ist; oder
b) falls ein Wert einer Größe, die ein Maß für die aktuelle Leistungsanforderung oder Fahrbelastung ist, einen vorbestimmten Belastungsschwellenwert unterschreitet,
wobei die Systemsteuerung (140) ferner dazu ausgebildet ist, gemäß einem zweiten Entlademodus (600; 516) die folgenden Schritte auszuführen:
Bestimmung der Ladezustände der mehreren Energiespeicher;
Hinzufügen (602) mindestens eines der mehreren Energiespeicher zu einer zweiten Entladegruppe in Abhängigkeit von den bestimmten Ladezuständen der mehreren Energiespeicher, derart, dass die Entladegruppe denjenigen Energiespeicher umfasst, der den höchsten Wert der bestimmten Ladezustände aufweist, und dass der Ladezustand jedes des mindestens einen Energiespeichers der zweiten Entladegruppe größer ist als oder gleich wie die Ladezustände der nicht der zweiten Entladegruppe zugeordneten Energiespeicher;
Zuschalten (602) lediglich des mindestens einen der zweiten Entladegruppe zugeordneten, noch nicht zugeschalteten Energiespeichers durch Schließen der entsprechenden Schaltschütze (170) mittels der jeweiligen Energiespeichersteuerungen (130);
wobei anschließend weitere bisher nicht zugeschaltete Energiespeicher zu der zweiten Entladegruppe jeweils dann hinzugefügt und durch Schließen der entsprechenden Schaltschütze (170) zugeschaltet werden (608),
wobei als nächstes der Energiespeicher zusätzlich zugeschaltet wird, der die von den bisher nicht zugeschalteten Energiespeichern den höchsten Ladezustand aufweist, und wobei der Zeitpunkt der Zuschaltung dann erfolgt, wenn die Ladezustände der bereits zugeschalteten Energiespeicher auf diesen Ladezustand gefallen sind, und
wobei die Systemsteuerung (140) ferner dazu ausgebildet ist, wahlweise einen Entladevorgang gemäß dem ersten Entlademodus (400) oder gemäß dem zweiten Entlademodus (600; 516) durchzuführen.

## Claims

1. An energy storage system, in particular a traction energy storage system (100), for a vehicle, comprising:
a plurality of electrical energy storage devices (110), wherein each of the energy storage devices comprises electrically connected cell modules (120), a contactor (170), an energy storage high-voltage interface (114) and an energy storage controller (130), controlling the contactor,
wherein each of the cell modules comprises a plurality of storage cells (122) and a cell module controller (124); and
wherein, in each energy storage device (110), the contactor (170) is designed to connect the cell modules of the energy storage device to the energy storage high-voltage interface (114) of the respective energy storage device as specified by the energy storage controller (130) in a closed position of the contactor and to disconnect it in an open position of the contactor;
wherein the energy storage high-voltage interfaces of the energy storage devices are connected in parallel in the energy storage system; and
a system controller (140) which is in operative connection with the energy storage controllers (130) and is designed to perform the following steps repeatedly according to a first discharging mode (400) :
determining the states of charge of the plurality of energy storage devices;
establishing (402) a first discharging group (702) by assigning at least one of the plurality of energy storage devices (110) to the first discharging group (702) in dependence on the determined states of charge of the plurality of energy storage devices (110) in such a way that the first discharging group (702) comprises the energy storage device that has the highest value of the determined states of charge, and that the state of charge of each of the at least one energy storage devices of the first discharging group is greater than or equal to the states of charge of the energy storage devices not assigned to the first discharging group;
connecting up (404) only the energy storage devices assigned to the first discharging group by closing the corresponding contactors (170) by means of the respective energy storage controllers (130); and
disconnecting (412) the connected-up energy storage devices by opening the respective contactors (170) by means of the respective energy storage controllers (130) once the state of charge of the energy storage devices assigned to the first discharging group has fallen to a value which is less by a predetermined value than a state of charge of the energy storage device that has the highest state of charge of the energy storage devices that are not connected up, wherein, once the state of charge of the connected-up energy storage devices of the first discharging group has fallen to the value which is less by a predetermined value than a state of charge of the energy storage device that has the highest state of charge of the energy storage devices that are not connected up, a switching over takes place according to the first discharging mode to a newly established discharging group with at least this energy storage device by disconnecting the last connected-up energy storage device and connecting up the newly established discharging group only when there is compliance (410) with a predetermined switching-over precondition, wherein the predetermined switching-over precondition is complied with if
a) the vehicle has come to a standstill; or
b) if a value of a variable which is a measure of the current power output requirement or driving loading goes below a predetermined loading threshold value,
wherein the system controller (140) is also designed to perform the following steps according to a second discharging mode (600; 516):
determining the states of charge of the plurality of energy storage devices;
adding (602) at least one of the plurality of energy storage devices to a second discharging group in dependence on the determined states of charge of the plurality of energy storage devices in such a way that the discharging group comprises the energy storage device that has the highest value of the determined states of charge, and that the state of charge of each of the at least one energy storage devices of the second discharging group is greater than or equal to the states of charge of the energy storage devices not assigned to the second discharging group;
connecting up (602) only the at least one not yet connected-up energy storage device assigned to the second discharging group by closing the corresponding contactors (170) by means of the respective energy storage controllers (130);
wherein subsequently further previously not connected-up energy storage devices are then respectively added to the second discharging group and are connected up (608) by closing the corresponding contactors (170),
wherein next the energy storage device that has the highest state of charge of the previously not connected-up energy storage devices is additionally connected up, and wherein the connecting up takes place at a point in time when the states of charge of the already connected-up energy storage devices have fallen to this state of charge, and
wherein the system controller (140) is also designed optionally to carry out a discharging operation according to the first discharging mode (400) or according to the second discharging mode (600; 516).

2. The energy storage system according to Claim 1, wherein the establishing of the first discharging group comprises: determining the N energy storage groups that have the N highest values of the determined states of charge, where N is a predetermined natural number or a natural number ≥ 1 established in dependence on the determined states of charge and/or in dependence on a power output requirement, and establishing the determined N energy storage groups as a discharging group.

3. The energy storage system according to Claim 2, wherein the number N is established in dependence on a power output requirement for the energy storage system, in particular in such a way that N establishes the smallest number of energy storage devices with which the current power output requirement can be provided as a discharge power.

4. The energy storage system according to one of the preceding claims, wherein the system controller (140) is designed to change from a discharging operation according to the first discharging mode to a discharging operation according to the second discharging mode if (508) the state of charge of all of the energy storage devices is in each case less than a predetermined threshold value.

5. The energy storage system according to one of the preceding claims, wherein the system controller (140) is designed to start a discharging operation with a second discharging mode until a number of the energy storage devices that have the highest state of charge reaches a predetermined minimum number and to change to the first discharging mode when the minimum number is reached.

6. The energy storage system according to one of the preceding claims, wherein the system controller (140) is designed to connect up all of the energy storage devices according to a charging mode for charging the energy storage system by closing the contactors, in particular one after the other or at the same time.

7. The energy storage system according to one of the preceding claims, wherein the system controller (140) is designed to perform the following steps according to a charging mode for charging the energy storage system:
determining the states of charge of the plurality of energy storage devices;
establishing a charging group by assigning at least one of the plurality of energy storage devices to the charging group in dependence on the determined states of charge of the plurality of energy storage devices in such a way that the charging group comprises the energy storage device that has the smallest value of the determined states of charge, and that the state of charge of each of the at least one energy storage devices of the charging group is less than or equal to the states of charge of the energy storage devices not assigned to the charging group;
connecting up (520) only the not yet connected-up energy storage devices assigned to the charging group by closing the corresponding contactors (170) by means of the respective energy storage controllers (130);
wherein subsequently further previously not connected-up energy storage devices are then respectively added to the charging group and are connected up (522) by closing the corresponding contactors (170) if their state of charge coincides with a range defined by the states of charge of the already connected-up energy storage devices of the charging group.

8. A motor vehicle, in particular a commercial vehicle, which comprises an energy storage system (100) according to one of Claims 1 to 7.

9. A method for operating an energy storage system, in particular a traction energy storage system (100), for a vehicle, wherein the energy storage system comprises:
a plurality of electrical energy storage devices (110), wherein each of the energy storage devices comprises electrically connected cell modules (120), a contactor (170), an energy storage high-voltage interface (114) and an energy storage control device (130) controlling the contactor,
wherein each of the cell modules comprises a plurality of storage cells (122) and a cell module controller (124); and
wherein, in each energy storage device (110), the contactor (170) is designed to connect the cell modules of the energy storage device to the energy storage high-voltage interface (114) of the respective energy storage device as specified by the energy storage controller (130) in a closed position of the contactor and to disconnect it in an open position of the contactor;
wherein the energy storage high-voltage interfaces of the energy storage devices are connected in parallel in the energy storage system;
wherein the method performs the following steps repeatedly according to a first discharging mode (400) :
determining the states of charge of the plurality of energy storage devices;
establishing (402) a first discharging group (702) by assigning at least one of the plurality of energy storage devices (110) to the first discharging group (702) in dependence on the determined states of charge of the plurality of energy storage devices (110) in such a way that the first discharging group (702) comprises the energy storage device that has the highest value of the determined states of charge, and that the state of charge of each of the at least one energy storage devices of the first discharging group (702) is greater than or equal to the states of charge of the energy storage devices not assigned to the first discharging group;
connecting up (404) only the energy storage devices assigned to the first discharging group by closing the corresponding contactors (170) by means of the respective energy storage controllers (130); and
disconnecting (412) the connected-up energy storage devices by opening the respective contactors (170) by means of the respective energy storage controllers (130) once the state of charge of the energy storage devices assigned to the first discharging group has fallen to a value which is less by a predetermined value than a state of charge of the energy storage device that has the highest state of charge of the energy storage devices that are not connected up, wherein, once the state of charge of the connected-up energy storage devices of the first discharging group has fallen to the value which is less by a predetermined value than a state of charge of the energy storage device that has the highest state of charge of the energy storage devices that are not connected up, a switching over takes place according to the first discharging mode to a newly established discharging group with at least this energy storage device by disconnecting the last connected-up energy storage device and connecting up the newly established discharging group only when there is compliance (410) with a predetermined switching-over precondition, wherein the predetermined switching-over precondition is complied with if
a) the vehicle has come to a standstill; or
b) if a value of a variable which is a measure of the current power output requirement or driving loading goes below a predetermined loading threshold value,
wherein the system controller (140) is also designed to perform the following steps according to a second discharging mode (600; 516):
determining the states of charge of the plurality of energy storage devices;
adding (602) at least one of the plurality of energy storage devices to a second discharging group in dependence on the determined states of charge of the plurality of energy storage devices in such a way that the discharging group comprises the energy storage device that has the highest value of the determined states of charge, and that the state of charge of each of the at least one energy storage devices of the second discharging group is greater than or equal to the states of charge of the energy storage devices not assigned to the second discharging group;
connecting up (602) only the at least one not yet connected-up energy storage device assigned to the second discharging group by closing the corresponding contactors (170) by means of the respective energy storage controllers (130);
wherein subsequently further previously not connected-up energy storage devices are then respectively added to the second discharging group and are connected up (608) by closing the corresponding contactors (170),
wherein next the energy storage device that has the highest state of charge of the previously not connected-up energy storage devices is additionally connected up, and wherein the connecting up takes place at a point in time when the states of charge of the already connected-up energy storage devices have fallen to this state of charge, and
wherein the system controller (140) is also designed optionally to carry out a discharging operation according to the first discharging mode (400) or according to the second discharging mode (600; 516).

## Revendications

1. Système d'accumulateurs d'énergie, en particulier système d'accumulateurs d'énergie de traction (100) pour un véhicule, comprenant :
plusieurs accumulateurs d'énergie électrique (110), chacun des accumulateurs d'énergie comprenant des modules de cellules (120) reliés électriquement, un contacteur électrique (170), une interface haute tension d'accumulateur d'énergie (114) et une commande d'accumulateur électrique (130) commandant le contacteur électrique,
chacun des modules de cellules comprenant plusieurs cellules d'accumulateur (122) et une commande de module de cellules (124) ; et
dans lequel, dans chaque accumulateur d'énergie (110), le contacteur électrique (170) est réalisé pour relier les modules de cellules de l'accumulateur d'énergie à l'interface haute tension d'accumulateur d'énergie (114) de l'accumulateur d'énergie respectif selon la spécification de la commande d'accumulateur d'énergie (130) dans une position de fermeture du contacteur électrique et pour les séparer dans une positon d'ouverture du contacteur électrique ;
les interfaces haute tension d'accumulateur d'énergie de l'accumulateur d'énergie étant connectées en parallèle dans le système d'accumulateurs d'énergie ; et
une commande système (140) en relation active avec les commandes d'accumulateur d'énergie (130) et qui est réalisée pour effectuer selon un premier mode de décharge (400) de façon répétée les étapes suivantes consistant à :
déterminer les états de charge des plusieurs accumulateurs d'énergie ;
définir (402) un premier groupe de décharge (702) par l'attribution d'au moins l'un des plusieurs accumulateurs d'énergie (110) au premier groupe de décharge (702) en fonction des états de charge déterminés des plusieurs accumulateurs d'énergie (110) de telle sorte que le premier groupe de décharge (702) comprend l'accumulateur d'énergie qui présente la valeur la plus élevée des états de charge déterminés, et que l'état de charge de chacun des au moins un accumulateur d'énergie du premier groupe de décharge est supérieur ou égal aux états de charge des accumulateurs d'énergie non attribués au premier groupe de décharge ;
mettre en circuit (404) uniquement les accumulateurs d'énergie attribués au premier groupe de décharge par la fermeture des contacteurs électriques (170) correspondants au moyen des commandes d'accumulateur d'énergie (130) respectives ; et
séparer (412) les accumulateurs d'énergie mis en circuit par l'ouverture des contacteurs électriques (170) respectifs au moyen des commandes d'accumulateur d'énergie (130) respectives après que l'état de charge des accumulateurs d'énergie attribués au premier groupe de décharge a chuté à une valeur qui est inférieure d'une valeur prédéterminée à un état de charge de l'accumulateur d'énergie qui présente l'état de charge le plus élevé parmi les accumulateurs d'énergie non mis en circuit,
dans lequel, après que l'état de charge des accumulateurs d'énergie mis en circuit du premier groupe de décharge a chuté à la valeur qui est inférieure d'une valeur prédéterminée à un état de charge de l'accumulateur d'énergie qui parmi les accumulateurs d'énergie non mis en circuit présente l'état de charge le plus élevé, une commutation selon le premier mode de décharge à un groupe de décharge nouvellement défini avec au moins cet accumulateur d'énergie par la séparation des accumulateurs d'énergie mis en circuit en dernier, et la mise en circuit du groupe de décharge nouvellement défini ne sont effectuées que si une condition de commutation prédéterminée est satisfaite (410), la condition de commutation prédéterminée étant satisfaite si
a) le véhicule s'est immobilisé ; ou
b) si une valeur d'une grandeur qui est une mesure de la demande de puissance ou de la sollicitation de conduite actuelle soupasse une valeur seuil de sollicitation prédéterminée,
la commande système (140) étant en outre réalisée pour effectuer selon un deuxième mode de décharge (600 ; 516) les étapes suivantes consistant à :
déterminer les états de charge des plusieurs accumulateurs d'énergie ;
ajouter (602) au moins l'un des plusieurs accumulateurs d'énergie à un deuxième groupe de décharge en fonction des états de charge déterminés des plusieurs accumulateurs d'énergie de telle sorte que le groupe de décharge comprend l'accumulateur d'énergie qui présente la valeur la plus élevée des états de charge déterminés, et que l'état de charge de chacun du au moins un accumulateur d'énergie du deuxième groupe de décharge est supérieur ou égal aux états de charge des accumulateurs d'énergie non attribués au deuxième groupe de décharge ;
mettre en circuit (602) uniquement ledit au moins un accumulateur d'énergie attribué au deuxième groupe de décharge, pas encore mis en circuit, par la fermeture des contacteurs électriques (170) correspondants au moyen des commandes d'accumulateur d'énergie (130) respectives ;
dans lequel, ensuite d'autres accumulateurs d'énergie pas encore mis en circuit sont alors ajoutés respectivement au deuxième groupe de décharge et sont mis en circuit (608) par la fermeture des contacteurs électriques (170) correspondants,
dans lequel ensuite l'accumulateur d'énergie qui présente parmi les accumulateurs d'énergie pas encore mis en circuit l'état de charge le plus élevé est également mis en circuit, et le moment de la mise en circuit survient quand les états de charge des accumulateurs d'énergie déjà mis en circuit ont chuté à cet état de charge, et
la commande système (140) étant en outre réalisée pour effectuer sélectivement une opération de décharge selon le premier mode de décharge (400) ou selon le deuxième mode de décharge (600 ; 516).

2. Système d'accumulateurs d'énergie selon la revendication 1, dans lequel la définition du premier groupe de décharge comprend : la détermination des N accumulateurs d'énergie qui présentent les N valeurs les plus élevées des états de charge déterminés, N étant un nombre naturel ≥ 1 prédéterminé ou défini en fonction des états de charge déterminés et/ou en fonction d'une demande de puissance, et la définition des N accumulateurs d'énergie déterminés comme un groupe de décharge.

3. Système d'accumulateurs d'énergie selon la revendication 2, dans lequel le nombre N est défini en fonction d'une demande de puissance au système d'accumulateurs d'énergie, en particulier de telle sorte que N définit le plus petit nombre d'accumulateurs d'énergie qui permettent de fournir la demande de puissance actuelle comme puissance de décharge.

4. Système d'accumulateurs d'énergie selon l'une quelconque des revendications précédentes, dans lequel la commande système (140) est réalisée pour passer d'une opération de décharge selon le premier mode de décharge à une opération de décharge selon le deuxième mode de décharge si (508) l'état de charge de tous les accumulateurs d'énergie est respectivement inférieur à une valeur seuil prédéterminée.

5. Système d'accumulateurs d'énergie selon l'une quelconque des revendications précédentes, dans lequel la commande système (140) est réalisée pour démarrer une opération de décharge avec un deuxième mode de décharge jusqu'à ce qu'un nombre des accumulateurs d'énergie qui présentent l'état de charge le plus élevé atteigne un nombre minimal prédéterminé, et pour passer au premier mode de décharge lorsque le nombre minimal est atteint.

6. Système d'accumulateurs d'énergie selon l'une quelconque des revendications précédentes, dans lequel la commande système (140) est réalisée, selon un mode de charge destiné à recharger le système d'accumulateurs d'énergies, pour mettre en circuit tous les accumulateurs d'énergie par la fermeture des contacteurs électriques, en particulier les uns après les autres ou simultanément.

7. Système d'accumulateurs d'énergie selon l'une quelconque des revendications précédentes, dans lequel la commande système (140), selon un mode de charge destiné à recharger le système d'accumulateurs d'énergie, est réalisée pour effectuer les étapes suivantes consistant à :
déterminer les états de charge des plusieurs accumulateurs d'énergie ;
définir un groupe de charge par l'attribution d'au moins l'un plusieurs accumulateurs d'énergie au groupe de charge en fonction des états de charge déterminés des plusieurs accumulateurs d'énergie de telle sorte que le groupe de charge comprend l'accumulateur d'énergie qui présente la plus petite valeur des états de charge déterminés, et que l'état de charge de chacun du au moins un accumulateur d'énergie du groupe de charge est inférieur ou égal aux états de charge des accumulateurs d'énergie non attribués au groupe de charge ;
mettre en circuit (520) uniquement les accumulateurs d'énergie attribués au groupe de charge, pas encore mis en circuit, par la fermeture des contacteurs électriques (170) correspondants au moyen des commandes d'accumulateur d'énergie (130) respectives ;
dans lequel ensuite d'autres accumulateurs d'énergie, pas encore mis en circuit, sont alors respectivement ajoutés au groupe de charge, et sont mis en circuit (522) par la fermeture des contacteurs électriques (170) correspondants lorsque leur état de charge coïncide avec une zone définie par les états de charge des accumulateurs d'énergie du groupe de charge déjà mis en circuit.

8. Véhicule automobile, en particulier véhicule utilitaire, qui comprend un système d'accumulateurs d'énergie (100) selon l'une quelconque des revendications 1 à 7.

9. Procédé permettant de faire fonctionner un système d'accumulateurs d'énergie, en particulier un système d'accumulateurs d'énergie de traction (100) pour un véhicule, le système d'accumulateurs d'énergie comprenant :
plusieurs accumulateurs d'énergie électrique (110), chacun des accumulateurs d'énergie comprenant des modules de cellules (120) reliés électriquement, un contacteur électrique (170), une interface haute tension d'accumulateur d'énergie (114) et une commande d'accumulateur électrique (130) commandant le contacteur électrique,
chacun des modules de cellules comprenant plusieurs cellules d'accumulateur (122) et une commande de module de cellules (124) ; et
dans lequel, dans chaque accumulateur d'énergie (110), le contacteur électrique (170) est réalisé pour relier les modules de cellules de l'accumulateur d'énergie à l'interface haute tension d'accumulateur d'énergie (114) de l'accumulateur d'énergie respectif selon la spécification de la commande d'accumulateur d'énergie (130) dans une position de fermeture du contacteur électrique et pour les séparer dans une positon d'ouverture du contacteur électrique ;
les interfaces haute tension d'accumulateur d'énergie de l'accumulateur d'énergie étant connectées en parallèle dans le système d'accumulateurs d'énergie ;
le procédé effectuant selon un premier mode de décharge (400) de façon répétée les étapes suivantes consistant à :
déterminer les états de charge des plusieurs accumulateurs d'énergie ;
définir (402) un premier groupe de décharge (702) par l'attribution d'au moins l'un des plusieurs accumulateurs d'énergie (110) au premier groupe de décharge (702) en fonction des états de charge déterminés des plusieurs accumulateurs d'énergie (110), de telle sorte que le premier groupe de décharge (702) comprend l'accumulateur d'énergie qui présente la valeur la plus élevée des états de charge déterminés, et que l'état de charge de chacun du au moins un accumulateur d'énergie du premier groupe de décharge (702) est supérieur ou égal aux états de charge des accumulateurs d'énergie non attribués au premier groupe de décharge ;
mettre en circuit (404) uniquement les accumulateurs d'énergie attribués au premier groupe de décharge par la fermeture des contacteurs électriques (170) correspondants au moyen des commandes d'accumulateur d'énergie (130) respectives ; et
séparer (412) les accumulateurs d'énergie mis en circuit par l'ouverture des contacteurs électriques (170) respectifs au moyen des commandes d'accumulateur d'énergie (130) respectives après que l'état de charge des accumulateurs d'énergie attribués au premier groupe de décharge a chuté à une valeur qui est inférieure d'une valeur prédéterminée à un état de charge de l'accumulateur d'énergie qui présente l'état de charge le plus élevé parmi les accumulateurs d'énergie non mis en circuit,
dans lequel, après que l'état de charge des accumulateurs d'énergie mis en circuit du premier groupe de décharge a chuté à la valeur qui est inférieure d'une valeur prédéterminée à un état de charge de l'accumulateur d'énergie qui parmi les accumulateurs d'énergie non mis en circuit présente l'état de charge le plus élevé, une commutation selon le premier mode de décharge à un groupe de décharge nouvellement défini avec au moins cet accumulateur d'énergie par la séparation des accumulateurs d'énergie mis en circuit en dernier, et la mise en circuit du groupe de décharge nouvellement défini ne sont effectuées que si une condition de commutation prédéterminée est satisfaite (410), la condition de commutation prédéterminée étant satisfaite si
a) le véhicule s'est immobilisé ; ou
b) si une valeur d'une grandeur qui est une mesure de la demande de puissance ou de la sollicitation de conduite actuelle soupasse une valeur seuil de sollicitation prédéterminée,
la commande système (140) étant en outre réalisée pour effectuer selon un deuxième mode de décharge (600 ; 516) les étapes suivantes consistant à :
déterminer les états de charge des plusieurs accumulateurs d'énergie ;
ajouter (602) au moins l'un des plusieurs accumulateurs d'énergie à un deuxième groupe de décharge en fonction des états de charge déterminés des plusieurs accumulateurs d'énergie de telle sorte que le groupe de décharge comprend l'accumulateur d'énergie qui présente la valeur la plus élevée des états de charge déterminés, et que l'état de charge de chacun du au moins un accumulateur d'énergie du deuxième groupe de décharge est supérieur ou égal aux états de charge des accumulateurs d'énergie non attribués au deuxième groupe de décharge ;
mettre en circuit (602) uniquement ledit au moins un accumulateur d'énergie attribué au deuxième groupe de décharge, pas encore mis en circuit, par la fermeture des contacteurs électriques (170) correspondants au moyen des commandes d'accumulateur d'énergie (130) respectives ;
dans lequel, ensuite d'autres accumulateurs d'énergie pas encore mis en circuit sont alors ajoutés respectivement au deuxième groupe de décharge et sont mis en circuit (608) par la fermeture des contacteurs électriques (170) correspondants,
dans lequel ensuite l'accumulateur d'énergie qui présente parmi les accumulateurs d'énergie pas encore mis en circuit l'état de charge le plus élevé est également mis en circuit, et le moment de la mise en circuit survient quand les états de charge des accumulateurs d'énergie déjà mis en circuit ont chuté à cet état de charge, et
la commande système (140) étant en outre réalisée pour effectuer sélectivement une opération de décharge selon le premier mode de décharge (400) ou selon le deuxième mode de décharge (600 ; 516).
